# EUROPEAN PATENT APPLICATION

(11) **EP 4 847 884 A1**
(43) Date of publication of application: **02.12.2026**
(21) Application number: 25178905.3
(22) Date of filing: 27.05.2025
(51) Int. Cl.: G01C 21/34

(54) **LANE/ZONE ELIGIBILITY AWARE VEHICLE ROUTING**

(71) Applicant: HERE Global B.V., 5611 ZT Eindhoven (NL)
(72) Inventor: BEAUREPAIRE, JEROME, 92400 COURBEVOIE (FR); L'HOSTIS, CHRISTELLE, 92400 COURBEVOIE (FR); BIBENS, ERWAN, 92400 COURBEVOIE (FR); GUERRAPIN, EMMANUEL, 92400 COURBEVOIE (FR)
(74) Representative: Sariot, Eray

(57) **Abstract**

It is inter-alia disclosed a method performed by at least one apparatus, the method comprising: obtaining or causing obtaining eligibility criteria information indicative of at least one eligibility criterion associated with at least one vehicle lane and/or with at least one drivable zone; obtaining or causing obtaining vehicle information indicative of at least one characteristic of a vehicle and/or of one or more users of the vehicle; determining or causing determining an eligibility of the vehicle and/or of the one or more users of the vehicle to drive in the at least one vehicle lane and/or in the at least one drivable zone based on the eligibility criteria information and the vehicle information; and routing or causing routing the vehicle based on the eligibility of the vehicle and/or of the one or more users of the vehicle to drive in the at least one vehicle lane and/or in the at least one drivable zone.

## Description

### FIELD OF THE DISCLOSURE

The present disclosure generally relates to the field of vehicle routing, in particular to routing a vehicle using particular lanes and/or particular zones.

### BACKGROUND

Across many cities and regions, particular lanes and/or particular zones such as, e.g., carpool lanes, electric vehicle (EV) lanes or low-emission zones (LEZs) are used, e.g. to improve traffic flow or to promote environment-friendly transportation methods. The use of such lanes and/or zones plays an important role in further improving traffic flow and promoting environment-friendly transportation methods, e.g. for the purpose of carbon emission reduction.

### SUMMARY OF SOME EMBODIMENTS OF THE INVENTION

The aforementioned particular lanes and/or zones are often underutilized, for example due to a lack of awareness among vehicle users (e.g., drivers), or due to confusion among vehicle users with respect to local regulations and/or with respect to traffic signs or traffic lights in said cities and/or regions. This applies in particular to vehicle users traveling through unfamiliar areas or across borders. For example, vehicle users may hesitate to use said particular lanes and/or zones for fear of fines or penalties. As a result, on the one hand, an overall usage of said particular lanes and/or zones may be undesirably low. On the other hand, a routing of vehicles in said cities and/or regions may not be optimal.

In view of this, it may be desirable to provide a method for routing a vehicle in an enhanced manner in particular with respect to a usage of said particular lanes and/or zones. In addition, it may be desirable to increase an overall usage of said particular lanes and/or zones.

It is therefore inter-alia an object of the present invention to provide a solution for routing a vehicle that takes into account said particular lanes and/or zones when routing the vehicle.

According to a first exemplary aspect of the invention, a method performed by at least one apparatus is disclosed, the method comprising:
- obtaining or causing obtaining eligibility criteria information indicative of at least one eligibility criterion associated with at least one vehicle lane and/or with at least one drivable zone;
- obtaining or causing obtaining vehicle information indicative of at least one characteristic of a vehicle and/or of one or more users of the vehicle;
- determining or causing determining an eligibility of the vehicle and/or of the one or more users of the vehicle to drive in the at least one vehicle lane and/or in the at least one drivable zone based on the eligibility criteria information and the vehicle information; and
- routing or causing routing the vehicle based on the eligibility of the vehicle and/or of the one or more users of the vehicle to drive in the at least one vehicle lane and/or in the at least one drivable zone.

In an exemplary embodiment, the at least one apparatus by which the method according to the first aspect is performed is part of or is comprised by the vehicle. For example, the at least one apparatus may be part of (e.g., may be integrated into) an infotainment system of the vehicle. The vehicle may for instance be an electric vehicle, e.g. a battery electric vehicle (BEV), and/or a vehicle with an internal combustion engine (ICE), e.g. a gasoline-powered vehicle and/or a hybrid vehicle.

Alternatively or in addition, in an exemplary embodiment, the at least one apparatus by which the method is performed corresponds to at least one mobile device such as, e.g., an Internet-of-Things (IoT) device, a smartphone, a tablet computer, a notebook computer, a smart watch, or a smart band.

Further alternatively or in addition, in an exemplary embodiment, the at least one apparatus by which the method is performed corresponds to at least one network entity such as at least one server (e.g. a routing server or a routing server cloud). For example, the at least one apparatus by which the method is performed may be integrated in the back end of a routing service providing company. The at least one apparatus may be a single apparatus or may comprise plural apparatuses.

Further, an apparatus is disclosed (and subsequently referred to as apparatus according to the first aspect of the invention) that is configured to perform and/or control the method according to the first aspect or comprises means for performing and/or controlling the steps of the method according to the first aspect. In this case, it is possible either for all of the steps of the method to be controlled, or for all of the steps of the method to be performed, or for one or more steps to be controlled and one or more steps to be performed. One or more of the steps can also be performed and/or controlled by the same unit. By way of example, one or more of the means may be formed by one or more processors.

Further, an apparatus (e.g. the at least one apparatus performing the method according to the first aspect) is disclosed (and subsequently referred to as apparatus according to the first aspect of the invention) that comprises at least one processor and at least one memory that contains program code, wherein the memory and the program code are configured to use the at least one processor to cause an apparatus (for example the apparatus having the processor and the memory) to perform and/or control at least the method according to the first aspect. In this case, it is possible either for all of the steps of the method to be controlled, or for all of the steps of the method to be performed, or for one or more steps to be controlled and one or more steps to be performed.

In an exemplary embodiment, the apparatus according to the first aspect is part of or is comprised by the vehicle. For example, the apparatus according to the first aspect may be part of (e.g., may be integrated into) an infotainment system of the vehicle. Alternatively or in addition, in an exemplary embodiment, the apparatus according to the first aspect corresponds to at least one mobile device, as further described herein. Further alternatively or in addition, in an exemplary embodiment, the apparatus according to the first aspect corresponds to at least one network entity such as at least one server (e.g. a routing server or a routing server cloud). For example, the apparatus according to the first aspect may be integrated in the back end of a routing service providing company.

Further, a system is disclosed (and subsequently referred to as system according to the first aspect of the invention) that comprises at least one apparatus (e.g. the at least one apparatus according to the first aspect) that is configured to perform and/or control the method according to the first aspect or comprises means for performing and/or controlling the steps of the method according to the first aspect. In this case, it is possible either for all of the steps of the method to be controlled, or for all of the steps of the method to be performed, or for one or more steps to be controlled and one or more steps to be performed.

Further, a computer program is disclosed (and subsequently referred to as computer program according to the first aspect of the invention) that comprises program instructions that cause a processor to perform and/or control the method according to the first aspect when the computer program runs on the processor. In other words, in an exemplary embodiment, a computer program is disclosed that comprises instructions, which, when executed by an apparatus, cause the apparatus to perform the method according to the first aspect. In this specification, a processor is intended to be understood to mean control units, microprocessors, microcontrol units such as microcontrollers, digital signal processors (DSP), application-specific integrated circuits (ASICs) or field programmable gate arrays (FPGAs), inter alia. In this case, it is possible either for all of the steps of the method to be controlled, or for all of the steps of the method to be performed, or for one or more steps to be controlled and one or more steps to be performed. By way of example, the computer program may be distributable via a network such as the internet, a telephone or mobile radio network and/or a local area network, for example. The computer program may at least in part be software and/or firmware of a processor. It may equally be implemented at least in part as hardware. By way of example, the computer program may be stored on a computer-readable storage medium, e.g. a magnetic, electric, electromagnetic, optical and/or other kind of storage medium. By way of example, the storage medium may be part of the processor, for example a (nonvolatile or volatile) program memory of the processor or a part thereof. By way of example, the storage medium is substantive, that is to say tangible, and/or non-transitory.

Accordingly, a computer-readable storage medium having stored thereon the computer program according to the first aspect is further disclosed.

The first aspect may in particular allow for taking into account particular vehicle lanes and/or drivable zones when routing a vehicle, thereby advantageously allowing for an enhanced routing of the vehicle (e.g., in the form of reducing a route time, a route distance and/or carbon emissions caused by the routed vehicle). In addition, the first aspect may allow for an increased overall usage of said particular lanes and/or zones, thereby reducing the overall carbon emissions associated with vehicles being routed, e.g. in a city or region comprising said particular lanes and/or zones (e.g. by improving an overall traffic flow in the city or region). More specifically, by determining the eligibility of the vehicle and/or of the user(s) of the vehicle to drive in the vehicle lane(s) and/or in the drivable zone(s), and by routing the vehicle based on the determined eligibility, the eligibility of the vehicle and/or of the user(s) to use the lane(s)/zone(s) is advantageously taken into account when routing the vehicle.

Exemplary embodiments of all aspects of the present invention may have one or more (or for instance all) of the properties described below.

As mentioned, the method according to the first aspect comprises
- obtaining or causing obtaining eligibility criteria information indicative of at least one eligibility criterion associated with at least one vehicle lane and/or with at least one drivable zone.

In an exemplary embodiment, the eligibility criteria information thus indicates and/or defines the at least one eligibility criterion. For example, the eligibility criteria information may comprise one or more (e.g. numerical) values indicating and/or defining the at least one eligibility criterion.

In an exemplary embodiment, the at least one eligibility criterion comprises an indication of at least one of the following:
∘ one or more eligible vehicle types;
∘ one or more eligible vehicle weights;
∘ one or more eligible vehicle spatial dimensions;
∘ one or more eligible vehicle emission characteristics; or
∘ one or more eligible vehicle user numbers.

In an exemplary embodiment, the one or more eligible vehicle types, vehicle weights, vehicle spatial dimensions, vehicle emissions characteristics, and/or vehicle user numbers correspond to types, weights, spatial dimensions, emissions characteristics, and/or user numbers of vehicles and/or of respective users of vehicles that are eligible to drive in the at least one vehicle lane and/or in the at least one drivable zone.

The at least one eligibility criterion may be a single eligibility criterion or may comprise plural eligibility criteria. Correspondingly, the eligibility criteria information may be indicative of a single eligibility criterion or may be indicative of plural eligibility criteria.

In an exemplary embodiment, the at least one eligibility criterion comprises at least one eligibility threshold, e.g. at least one of the following:
∘ a weight threshold indicating a minimum or maximum vehicle weight;
∘ one or more spatial dimension thresholds indicating one or more minimum or maximum vehicle spatial dimensions;
∘ one or more emission thresholds indicating one or more minimum or maximum values of one or more vehicle emission characteristics; or
∘ a user number threshold indicating a minimum or maximum number of vehicle users.

In an exemplary embodiment, (e.g. only) vehicles and/or users satisfying the weight threshold, the spatial dimension threshold(s), the emission threshold(s), and/or the user number threshold are eligible to drive in the at least one vehicle lane and/or in the at least one drivable zone.

Alternatively or in addition, in an exemplary embodiment, the eligibility criteria information comprises at least one eligibility list indicating one or more eligible vehicle types, vehicle weights, vehicle spatial dimensions, vehicle emission characteristics, and/or vehicle user numbers. In this exemplary embodiment, (e.g. only) vehicles and/or users with types, weights, spatial dimensions, emissions characteristics, and/or user numbers comprised by the at least one eligibility list may be eligible to drive in the at least one vehicle lane and/or in the at least one drivable zone.

As a non-limiting example, the at least one eligibility criterion may correspond to the vehicle being used by a minimum number of users (e.g., for the at least one vehicle lane being a carpool lane), and the eligibility criteria information may be indicative of said criterion, e.g. by indicating and/or defining a minimum number of vehicle users. As a further non-limiting example, the at least one eligibility criterion may correspond to the vehicle being an electric vehicle (EV) (e.g., for the at least one vehicle lane being an EV lane), and the eligibility criteria information may be indicative of said criterion, e.g. by indicating and/or defining at least one **eligible vehicle type (e.g., vehicle type 'electric vehicle').**

As mentioned, the at least one eligibility criterion is associated with the at least one vehicle lane and/or with the at least one drivable zone. In an exemplary embodiment, the at least one eligibility criterion is applicable to the at least one vehicle lane and/or to the at least one drivable zone.

As used herein, a vehicle lane may for instance be understood as a lane (e.g., a strip of roadway) for vehicles. Further, as used herein, a drivable zone may for instance be understood as a zone (e.g., a spatial area) drivable for vehicles.

In an exemplary embodiment, access to and/or usage of the at least one vehicle lane and/or of the at least one drivable zone is limited and/or restricted. For example, access to and/or usage of the at least one vehicle lane may be limited to vehicles and/or users of vehicles with eligible vehicle types, eligible vehicle weights, eligible vehicle spatial dimensions, eligible vehicle emissions characteristics, and/or eligible vehicle user numbers. The eligible vehicle types, vehicle weights, vehicle spatial dimensions, vehicle emissions characteristics, and/or vehicle user numbers may be predetermined.

In an exemplary embodiment, the at least one vehicle lane and/or the at least one drivable zone comprises at least one of the following:
∘ a carpool lane;
∘ a high-occupancy lane;
∘ an electric vehicle, EV, lane;
∘ a bus lane;
∘ a truck lane;
∘ a bike lane;
o a low-emission zone, LEZ; or
o a clean air zone.

A carpool (or car pool) lane may for instance comprise or correspond to a vehicle lane to be used (e.g. only) by car pools (e.g., vehicles with at least two users). A high-occupancy lane (or high-occupancy vehicle (HOV) lane) may for instance comprise or correspond to a vehicle lane to be used (e.g. only) by high-occupancy vehicles (e.g., vehicles with at least a predetermined minimum number of users).

An electric vehicle (EV) lane may for instance comprise or correspond to a vehicle lane to be used (e.g. only) by electric vehicles (e.g., battery electric vehicles (BEVs), hybrid electric vehicles (HEVs) etc.). A bus lane may for instance comprise or correspond to a vehicle lane to be used (e.g. only) by buses. A truck lane may for instance comprise or correspond to a vehicle lane to be used (e.g. only) by trucks. A bike lane may for instance comprise or correspond to a vehicle lane to be used (e.g. only) by bikes.

A low-emission zone (LEZ) may for instance comprise or correspond to a zone (e.g., a spatial area) to be used (e.g. only) by vehicles satisfying at least one predetermined emission criterion (for example vehicles causing relatively low emissions). A clean air zone may for instance comprise or correspond to a zone (e.g., a spatial area) to be used (e.g. only) by vehicles satisfying at least one air-pollution criterion (for example vehicles causing relatively low air pollution).

In particular the aforementioned vehicle lanes and/or drivable zones may be used for routing the vehicle in an advantageous manner. For example, in particular using the aforementioned vehicle lanes and/or drivable zones may allow to reduce a route time for completing a desired route (e.g. because there may be less traffic in/on said lanes/zones) and/or carbon emissions caused by the routed vehicle (e.g. because the vehicle may drive smoother in/on said lanes/zones due to less traffic). In addition, an overall usage of said vehicle lanes/drivable zones may be increased, which may in turn reduce the overall carbon emissions associated with multiple vehicles being routed.

The at least one eligibility criterion being associated with the at least one vehicle lane and/or with the at least one drivable zone may for instance mean that the eligibility of the vehicle and/or of the one or more users of the vehicle to drive in the at least one vehicle lane and/or in the at least one drivable zone depends on the at least one eligibility criterion. For example, the vehicle and/or the one or more users of the vehicle may be eligible to drive in the at least one vehicle lane and/or in the at least one drivable zone (e.g. only) if the at least one eligibility criterion is satisfied.

In an exemplary embodiment, a respective eligibility criterion is associated with a single vehicle lane (e.g., a single vehicle lane having a specific eligibility criterion) or with plural vehicle lanes (e.g., plural vehicles lanes having a same eligibility criterion). Alternatively or in addition, in an exemplary embodiment, a respective eligibility criterion is associated with a single drivable zone (e.g., a single drivable zone having a specific eligibility criterion) or with plural drivable zones (e.g., plural drivable zones having a same eligibility criterion).

In an exemplary embodiment, a same eligibility criterion may be associated with (e.g., apply to) one or more vehicle lanes and may further be associated with (e.g., apply to) one or more drivable zones (e.g., the one or more vehicle lanes and the one or more drivable zones may have the same eligibility criterion). As a non-limiting example, EV lanes and EV zones may have a same eligibility criterion, carpool lanes and carpool zones may have a same eligibility criterion, etc.

In an exemplary embodiment, obtaining or causing obtaining the eligibility criteria information comprises at least one of the following:
o determining or causing determining the eligibility criteria information by the at least one apparatus performing the method;
o retrieving or causing retrieving the eligibility criteria information from a database; or
o receiving or causing receiving the eligibility criteria information from at least one further (e.g. external) apparatus.

Thus, at least part of the eligibility criteria information may be determined by the at least one apparatus performing the method, at least part of the eligibility criteria information may be retrieved from a database, and/or at least part of the eligibility criteria information may be received from at least one further apparatus. The at least one further (e.g. external) apparatus may correspond to at least one network entity such as at least one server (e.g. a routing server or a routing server cloud). For example, the at least one further apparatus may be integrated in the back end of a routing service providing company. The database may for example be stored in a (e.g. internal) memory of the at least one apparatus performing the method or in a memory of the at least one further (e.g. external) apparatus.

In an exemplary embodiment, the eligibility criteria information is obtained or caused to be obtained based on at least one of traffic sign information, traffic light information, or location information.

Thus, in an exemplary embodiment, obtaining or causing obtaining the eligibility criteria information comprises:
- obtaining or causing obtaining at least one of the following:
   o traffic sign information associated with at least one traffic sign associated with the at least one vehicle lane and/or with the at least one drivable zone,
   o traffic light information associated with at least one traffic light associated with the at least one vehicle lane and/or with the at least one drivable zone, or
   o location information associated with a location associated with the at least one vehicle lane and/or with the at least one drivable zone; and
- obtaining or causing obtaining the eligibility criteria information based on the traffic sign information, based on the traffic light information and/or based on the location information.

The traffic sign information, the traffic light information and the location information may comprise or may correspond to information indicative of the at least one traffic sign, of the at least one traffic light, and of the location associated with the at least one vehicle lane and/or with the at least one drivable zone, respectively (an example of the respective information being respectively associated with the at least one traffic sign, the at least one traffic light and the location). In an exemplary embodiment, each of the traffic sign information, the traffic light information and the location information may comprise or may correspond to text information (e.g., one or more strings) and/or to one or more (e.g. numerical) values indicative of the at least one traffic sign, the at least one traffic light and the location associated with the at least one vehicle lane and/or with the at least one drivable zone, respectively.

As a non-limiting example, traffic sign information may comprise the text **"low-emission zone"** and/or a corresponding numerical value, and may be indicative of a traffic sign indicating a low-emission zone. As a further non-limiting example, traffic light information may comprise the text **"carpool lane"** and/or a corresponding numerical value, and may be indicative of a traffic light indicating a carpool lane. As a further non-limiting example, location information may comprise certain coordinate values and may be indicative of a location corresponding to the coordinate values.

**As used herein, the term "traffic sign"** may be understood to comprise road signs (e.g., signage) and road markings (e.g., markings on the roadbed). Thus, in an exemplary embodiment, the at least one traffic sign comprises or corresponds to at least one road sign and/or at least one road marking. The at least one traffic sign may be a single traffic sign or may comprise plural traffic signs. In an exemplary embodiment, the at least one traffic sign is associated with (e.g., applies to) at least part of the at least one vehicle lane and/or of the at least one drivable zone. In an exemplary embodiment, the at least one traffic sign is located on the at least one vehicle lane, adjacent to (e.g., at the roadside of) the at least one vehicle lane, adjacent to the at least one drivable zone, within the at least one drivable zone, and/or at the entry of the at least one drivable zone.

**As used herein, the term "traffic light" may be understood to comprise signaling lights (e.g., a** stoplight) and indicator light panels (e.g., illuminated panels). Thus, in an exemplary embodiment, the at least one traffic light comprises or corresponds to at least one signaling light and/or at least one indicator light panel. The at least one traffic light may be a single traffic light or may comprise plural traffic lights. While an indicator light panel may function as a (e.g. variable) traffic sign (e.g., depending on how the panels are illuminated), a signaling light may, e.g., indicate the eligibility criteria information by means of color and/or intensity of the signaling light. In an exemplary embodiment, the at least one traffic light is associated with (e.g., applies to) at least part of the at least one vehicle lane and/or of the at least one drivable zone. In an exemplary embodiment, the at least one traffic light is located on the at least one vehicle lane, adjacent to (e.g., at the roadside of) the at least one vehicle lane, adjacent to the at least one drivable zone, within the at least one drivable zone and/or at the entry of the at least one drivable zone.

In an exemplary embodiment, the location (or position) associated with the at least one vehicle lane and/or with the at least one drivable zone corresponds to a location of (e.g. part of) the at least one vehicle lane and/or of (e.g. part of) the at least one drivable zone. Alternatively or in addition, in an exemplary embodiment, the location associated with the at least one vehicle lane and/or with the at least one drivable zone corresponds to a location in the vicinity of the at least one vehicle lane and/or of the at least one drivable zone. For example, the location associated with the at least one vehicle lane and/or with the at least one drivable zone may correspond to a location which is located within a predetermined distance threshold from a location of (e.g. part of) the at least one vehicle lane and/or of (e.g. part of) the at least one drivable zone.

By obtaining the eligibility criteria information based on the traffic sign information, traffic light information and/or location information, information available to the vehicle and/or to the user(s) of the vehicle may advantageously be used for obtaining the eligibility criteria information which may then in turn be used for taking into account said particular lanes and/or zones for routing the vehicle.

In an exemplary embodiment, the location information is further associated with a (e.g., current) location of the vehicle (e.g., a current geographical location of the vehicle). Thus, in an exemplary embodiment, the information (e.g., one or more numerical values) comprised by or corresponding to the location information (see above) may further be indicative of the location of the vehicle. As a non-limiting example, the location information may comprise coordinate values indicative of the location of the vehicle. In an exemplary embodiment, the location of the vehicle may thus correspond to a location of (e.g. part of) the at least one vehicle lane and/or of (e.g. part of) the at least one drivable zone.

Alternatively or in addition, in an exemplary embodiment, the location of the vehicle may correspond to a location in the vicinity of the at least one vehicle lane and/or of the at least one drivable zone. For example, the location of the vehicle may be located within a predetermined distance threshold from the location of (e.g. part of) the at least one vehicle lane and/or of (e.g. part of) the at least one drivable zone. In other words, in an exemplary embodiment, the vehicle may be located in the at least one vehicle lane, within the at least one drivable zone, and/or in the vicinity of the at least one vehicle lane and/or of the at least one drivable zone (e.g., at a point in time at which the location information is obtained). Yet put differently, in an exemplary embodiment, the vehicle may come into a vicinity of the at least one vehicle lane and/or of the at least one drivable zone, and corresponding location information may be used to obtain the eligibility criteria information.

In this way, the location information which may be associated with a location associated with the at least one vehicle lane and/or with the at least one drivable zone, and which may further be associated with a (e.g., current) location of the vehicle may be advantageously used to obtain (e.g. only) such eligibility criteria information applicable to respective vehicle lanes and/or drivable zones that are close to a (e.g., current) location of the vehicle and are thus relevant at a corresponding point in time.

In an exemplary embodiment, obtaining or causing obtaining the traffic sign information comprises obtaining at least one image of the at least one traffic sign (e.g., using at least one camera comprised by the vehicle and/or by the at least one apparatus performing the method). Similarly, in an exemplary embodiment, obtaining or causing obtaining the traffic light information comprises obtaining at least one image of the at least one traffic light (e.g., using at least one camera comprised by the vehicle and/or by said at least one apparatus).

Correspondingly, in an exemplary embodiment, the traffic sign information is representative of at least one (e.g. digital) image of the at least one traffic sign and/or the traffic light information is representative of at least one (e.g. digital) image of the at least one traffic light. In other words, the traffic sign information may comprise or may correspond to image information representative of the at least one image of the at least one traffic sign, and/or the traffic light information may comprise or may correspond to image information representative of the at least one image of the at least one traffic light.

In this way, the traffic sign information and/or the traffic light information and, based thereon, the eligibility criteria information may be obtained in a straightforward manner (e.g. using a camera already comprised by the vehicle and/or by the at least one apparatus performing the method).

In an exemplary embodiment, obtaining or causing obtaining the location information comprises determining the location information by the at least one apparatus performing the method (e.g., by means of dead reckoning), and/or receiving the location information from at least one further (e.g. external) apparatus (e.g., via GNSS or the like). Thus, at least part of the location information may be determined by the at least one apparatus performing the method, and/or at least part of the location information may be received from at least one further apparatus. The at least one further (e.g. external) apparatus may correspond to at least one network entity such as at least one server (e.g. a routing server or a routing server cloud). For example, the at least one further apparatus may be integrated in the back end of a routing service providing company.

In this way, the location information and, based thereon, the eligibility criteria information may be obtained in a straightforward manner (e.g. using positioning techniques already used by the vehicle and/or by the at least one apparatus performing the method).

In an exemplary embodiment, obtaining or causing obtaining the eligibility criteria information based on the traffic sign information comprises retrieving the eligibility criteria information from the database based on the traffic sign information, and/or receiving the eligibility criteria information from the at least one further apparatus in response to and/or after providing the traffic sign information to the at least one further apparatus.

Similarly, in an exemplary embodiment, obtaining or causing obtaining the eligibility criteria information based on the traffic light information comprises retrieving the eligibility criteria information from the database based on the traffic light information, and/or receiving the eligibility criteria information from the at least one further apparatus in response to and/or after providing the traffic light information to the at least one further apparatus.

Similarly, in an exemplary embodiment, obtaining or causing obtaining the eligibility criteria information based on the location information comprises retrieving the eligibility criteria information from the database based on the location information, and/or receiving the eligibility criteria information from the at least one further apparatus in response to and/or after providing the location information to the at least one further apparatus.

Obtaining or causing obtaining said traffic sign information, traffic light information and/or location information may trigger the method according to the first aspect. Alternatively or in addition, the method according to the first aspect may be triggered by obtaining or by causing obtaining an indication of a driving maneuver associated with the at least one vehicle lane and/or with the at least one drivable zone (e.g., a lane change to the at least one vehicle lane or entry into the at least one drivable zone), and/or by obtaining or causing obtaining a user request (e.g., as user input).

Thus, in an exemplary embodiment, the method is performed based on (e.g., is triggered by) obtaining or causing obtaining at least one of the following:
o traffic sign information associated with at least one traffic sign associated with the at least one vehicle lane and/or with the at least one drivable zone;
o traffic light information associated with at least one traffic light associated with the at least one vehicle lane and/or with the at least one drivable zone;
o location information associated with a location associated with the at least one vehicle lane and/or with the at least one drivable zone;
o an indication of a driving maneuver associated with the at least one vehicle lane and/or with the at least one drivable zone; or
o a user request.

In other words, in an exemplary embodiment, the method is performed based on (e.g., after and/or in response to) obtaining or causing obtaining at least one of: trigger information, wherein the trigger information comprises or corresponds to at least one of the traffic sign information, the traffic light information, or the location information; an indication of a driving maneuver; or a user request.

The driving maneuver associated with the at least one vehicle lane and/or with the at least one drivable zone may for example correspond to a lane change (e.g., to the at least one vehicle lane), a turn (e.g., onto the at least one vehicle lane), entry into the at least one drivable zone, approaching the at least one vehicle lane and/or the at least one drivable zone, or the like.

In an exemplary embodiment, the indication of the driving maneuver indicates that the driving maneuver is being, has been or is about to be performed. The indication of the driving maneuver may for example comprise or correspond to a signal (e.g., a control signal) signaling that the driving maneuver is being, has been or is about to be performed. As a non-limiting example, if the steering wheel is being, has been or is about to be turned in order to take a turn, a corresponding indication may indicate that a turn (an example of a driving maneuver) is being, has been or is about to be taken.

The user request may for instance be made by a user of the vehicle, e.g. haptically (e.g. by pressing a button and/or a touchscreen etc.), or orally (e.g., by a voice command).

As mentioned, the method according to the first aspect further comprises
- obtaining or causing obtaining vehicle information indicative of at least one characteristic of a vehicle and/or of one or more users of the vehicle.

Thus, in an exemplary embodiment, the vehicle information indicates and/or defines the at least one characteristic of the vehicle. Alternatively or in addition, in an exemplary embodiment, the vehicle information indicates a number of the one or more users of the vehicle (an example of the vehicle information being indicative of the one or more users of the vehicle). For example, the vehicle information may comprise or correspond to text information (e.g., one or more strings) and/or may comprise or correspond to one or more (e.g. numerical) values indicating and/or defining the at least one characteristic of the vehicle, and/or indicating a number of the one or more users of the vehicle.

The at least one characteristic (e.g., property) of the vehicle may be associated with and/or related to one or more of the aforementioned examples of eligibility criteria. For example, the at least one characteristic of the vehicle may correspond to a type of the vehicle, a weight of the vehicle, at least one spatial dimension of the vehicle, and/or at least one emission characteristic of the vehicle. The at least one characteristic of the vehicle may be a single characteristic of the vehicle or may comprise plural characteristics of the vehicle.

Thus, in an exemplary embodiment, the vehicle information is indicative of at least one of the following:
∘ a type of the vehicle;
∘ a weight of the vehicle;
∘ at least one spatial dimension of the vehicle;
∘ at least one emission characteristic of the vehicle; or
∘ a number of the one or more users of the vehicle.

The type of the vehicle may for instance comprise or correspond to a general type of the vehicle (e.g., motorized vehicle, non-motorized vehicle, car, bus, truck, bike) and/or may comprise or correspond to a specific type of the vehicle (e.g., a manufacturer and/or model type of the vehicle, etc.). The weight of the vehicle may for instance correspond to a mass of the vehicle (e.g., given in kg, pounds, tons, etc.).

The at least one spatial dimension of the vehicle may for instance comprise or correspond to a length, width and/or height of the vehicle (e.g., given in meters, centimeters, millimeters, or any other suitable unit of length). The at least one emission characteristic of the vehicle may for instance comprise or correspond to an amount of carbon emissions of the vehicle (e.g., per kilometer, per mile, or per any other suitable unit of length).

As used herein, a user of a vehicle may comprise or may correspond to a driver of the vehicle (e.g., a person driving the vehicle), and/or a passenger of the vehicle (e.g., a person in the vehicle not driving the vehicle). Generally, there may be no driver (e.g., for autonomous vehicles), a single driver, or plural drivers (e.g., two) in a vehicle (e.g., in driving school). Further, generally, there may be no passenger, a single passenger or plural passengers in a vehicle.

Thus, in an exemplary embodiment, the one or more users of the vehicle comprise or correspond to one or more drivers of the vehicle and/or one or more passengers of the vehicle. Alternatively, in an exemplary embodiment, there may be no users of the vehicle in the vehicle (e.g., no drivers and no passengers), for instance in the case of an autonomously driven cargo vehicle. In this exemplary embodiment, the vehicle information may indicate that there are no users in the vehicle.

Thus, the number of the one or more users of the vehicle may for instance represent or correspond to a number of drivers of the vehicle and/or to a number of passengers of the vehicle.

In an exemplary embodiment, obtaining or causing obtaining the vehicle information comprises at least one of the following:
o determining or causing determining the vehicle information by the at least one apparatus performing the method;
o retrieving or causing retrieving the vehicle information from a database; or
o receiving or causing receiving the vehicle information from at least one further (e.g. external) apparatus.

Thus, at least part of the vehicle information may be determined by the at least one apparatus performing the method, at least part of the vehicle information may be retrieved from a database, and/or at least part of the vehicle information may be received from at least one further apparatus. The at least one further (e.g. external) apparatus may correspond to at least one network entity such as at least one server (e.g. a routing server or a routing server cloud). For example, the at least one further apparatus may be integrated in the back end of a routing service providing company. The database may for example be stored in a (e.g. internal) memory of the at least one apparatus performing the method or in a memory of the at least one further (e.g. external) apparatus.

In an exemplary embodiment, the vehicle information is retrieved or is caused to be retrieved from the database based on vehicle identification information.

Thus, in an exemplary embodiment, obtaining or causing obtaining the vehicle information comprises:
- obtaining or causing obtaining vehicle identification information identifying the vehicle; and
- retrieving or causing retrieving the vehicle information from a database based on the vehicle identification information.

The vehicle identification information may for instance comprise or may correspond to information allowing for identifying the vehicle and/or an owner of the vehicle (e.g., a vehicle identification number (VIN) of the vehicle, a number plate of the vehicle, or the like). In an exemplary embodiment, obtaining or causing obtaining vehicle identification information comprises retrieving the vehicle identification information from a database (e.g., stored in an internal memory of the at least one apparatus performing the method), and/or determining the vehicle identification information by the at least one apparatus performing the method, e.g. by obtaining image information representative of at least one image of a vehicle identification device (e.g., a number plate of the vehicle, or the like).

In an exemplary embodiment, retrieving the vehicle information from the database based on the vehicle identification information comprises receiving the vehicle information from at least one further (e.g. external) apparatus in response to and/or after providing the vehicle identification information to the at least one further apparatus. To this end, the vehicle information may for example be stored in the database in association (e.g., together) with the vehicle identification information, and the database may be stored in a memory of or be accessible by the at least one further apparatus. The at least one further (e.g. external) apparatus may correspond to at least one network entity such as at least one server (e.g. a routing server or a routing server cloud). For example, the at least one further apparatus may be integrated in the back end of a routing service providing company.

Alternatively, in an exemplary embodiment, obtaining or causing obtaining the vehicle information comprises retrieving the vehicle information from a (e.g. internal) memory of the at least one apparatus performing the method.

As mentioned, the method according to the first aspect further comprises
- determining or causing determining an eligibility of the vehicle and/or of the one or more users of the vehicle to drive in the at least one vehicle lane and/or in the at least one drivable zone based on the eligibility criteria information and the vehicle information.

As used herein, the term "eligibility" encompasses both, eligibility and non-eligibility. Thus, in in an exemplary embodiment, the eligibility of the vehicle and/or of the one or more users of the vehicle to drive in the at least one vehicle lane and/or in the at least one drivable zone indicates either an eligibility or a non-eligibility of the vehicle and/or of the one or more users of the vehicle to drive in the at least one vehicle lane and/or in the at least one drivable zone.

In other words, as used herein, determining or causing determining an eligibility of the vehicle and/or of the one or more users of the vehicle to drive in the at least one vehicle lane and/or in the at least one drivable zone may be understood to mean determining whether or not the vehicle and/or the one or more users of the vehicle are eligible to drive in the at least one vehicle lane and/or in the at least one drivable zone. Yet put differently, in an exemplary embodiment, determining or causing determining an eligibility of the vehicle and/or of the one or more users of the vehicle comprises or corresponds to determining or causing determining an eligibility or a non-eligibility of the vehicle and/or of the one or more users of the vehicle.

In an exemplary embodiment, the eligibility of the vehicle and/or of the one or more users of the vehicle to drive in the at least one vehicle lane and/or in the at least one drivable zone comprises or corresponds to an eligibility of the vehicle to drive in the at least one vehicle lane and/or in the at least one drivable zone (for example if the eligibility depends, e.g. only, on the at least one characteristic of the vehicle).

Alternatively or in addition, in an exemplary embodiment, the eligibility of the vehicle and/or of the one or more users of the vehicle to drive in the at least one vehicle lane and/or in the at least one drivable zone comprises or corresponds to an eligibility of the one or more users of the vehicle to drive in the at least one vehicle lane and/or in the at least one drivable zone (for example if the eligibility depends, e.g. only, on the one or more users of the vehicle).

It is to be understood that various combinations of the aforementioned exemplary embodiments with respect to the eligibility of the vehicle and/or of the one or more users of the vehicle are also disclosed.

Thus, in an exemplary embodiment, the eligibility of the vehicle and/or of the one or more users of the vehicle to drive in the at least one vehicle lane and/or in the at least one drivable zone may comprise at least one of the following:
o an eligibility of the vehicle to drive in the at least one vehicle lane (e.g., an EV being eligible to drive in an EV lane);
o an eligibility of the vehicle to drive in the at least one drivable zone (e.g., a vehicle with eligible emission characteristics being eligible to drive in a low-emission zone);
o an eligibility of the one or more users of the vehicle to drive in the at least one vehicle lane (e.g., the one or more users of the vehicle being eligible to drive in a carpool lane); or
o an eligibility of the one or more users of the vehicle to drive in the at least one drivable zone (e.g., the one or more users of the vehicle being eligible to drive in a carpool zone).

In an exemplary embodiment, an eligibility to drive in a vehicle lane comprises or corresponds to an eligibility to use the vehicle lane. Similarly, in an exemplary embodiment, an eligibility to drive in a drivable zone comprises or corresponds to an eligibility to drive within the drivable zone, e.g. to use one or more pathways (e.g., roads, streets, etc.) comprised by the drivable zone. An eligibility to drive in a vehicle lane and/or in a drivable zone may, e.g., also be referred to as a right, an entitlement, an authorization, a permission, and/or a warrant to drive in the vehicle lane and/or in the drivable zone.

In an exemplary embodiment, determining or causing determining the eligibility of the vehicle and/or of the one or more users of the vehicle to drive in the at least one vehicle lane and/or in the at least one drivable zone based on the eligibility criteria information and the vehicle information comprises determining or causing determining whether or not the at least one eligibility criterion (which is indicated by the eligibility criteria information) is satisfied by the vehicle and/or by the one or more users of the vehicle (at least one characteristic of which is indicated by the vehicle information).

In other words, in an exemplary embodiment, both the eligibility criteria information and the vehicle information are used for determining or causing determining the eligibility. For example, in an exemplary embodiment, the vehicle and/or the one or more users of the vehicle are eligible to drive in the at least one vehicle lane and/or in the at least one drivable zone (e.g. only) if the at least one eligibility criterion is satisfied.

As mentioned, the method according to the first aspect further comprises
- routing or causing routing the vehicle based on the eligibility of the vehicle and/or of the one or more users of the vehicle to drive in the at least one vehicle lane and/or in the at least one drivable zone.

In other words, in an exemplary embodiment, the (determined) eligibility or non-eligibility of the vehicle and/or of the one or more users of the vehicle to drive in the at least one vehicle lane and/or in the at least one drivable zone is used for routing the vehicle.

For example, if it is determined (based on the eligibility criteria information and the vehicle information) that the vehicle and/or the one or more users of the vehicle are eligible to drive in the at least one vehicle lane and/or in the at least one drivable zone, the at least one vehicle lane and/or the at least one drivable zone may be used, at least in part, for routing the vehicle.

Thus, in an exemplary embodiment,
- determining or causing determining the eligibility of the vehicle and/or of the one or more users of the vehicle to drive in the at least one vehicle lane and/or in the at least one drivable zone comprises determining or causing determining that the vehicle and/or the one or more users of the vehicle are eligible to drive in the at least one vehicle lane and/or in the at least one drivable zone; and
- routing or causing routing the vehicle based on the eligibility of the vehicle and/or of the one or more users of the vehicle to drive in the at least one vehicle lane and/or in the at least one drivable zone comprises routing or causing routing the vehicle along a route comprising at least part of the at least one vehicle lane and/or of the at least one drivable zone.

In other words, if it is determined that the vehicle and/or the one or more users of the vehicle are eligible to drive in the at least one vehicle lane and/or in the at least one drivable zone, the vehicle may be routed along a route which comprises at least part of the at least one vehicle lane and/or which passes, at least in part, through the at least one drivable zone.

If it is on the other hand, for example, determined (based on the eligibility criteria information and the vehicle information) that the vehicle and/or the one or more users of the vehicle are not eligible to drive in the at least one vehicle lane and/or in the at least one drivable zone, the at least one vehicle lane and/or the at least one drivable zone may not be used, e.g. not even in part, for routing the vehicle.

Thus, in an exemplary embodiment,
- determining or causing determining the eligibility of the vehicle and/or of the one or more users of the vehicle to drive in the at least one vehicle lane and/or in the at least one drivable zone comprises determining or causing determining that the vehicle and/or the one or more users of the vehicle are not eligible to drive in the at least one vehicle lane and/or in the at least one drivable zone; and
- routing or causing routing the vehicle based on the eligibility of the vehicle and/or of the one or more users of the vehicle to drive in the at least one vehicle lane and/or in the at least one drivable zone comprises routing or causing routing the vehicle along a route that does not comprise the at least one vehicle lane and/or the at least one drivable zone.

In other words, if it is determined that the vehicle and/or the one or more users of the vehicle are not eligible to drive in the at least one vehicle lane and/or in the at least one drivable zone, the vehicle may be routed along a route which does not comprise (not even part of) the at least one vehicle lane and/or which does not pass through the at least one drivable zone (not even through part of it).

Yet put differently, if non-eligibility of the vehicle and/or of the one or more users of the vehicle to drive in the at least one vehicle lane and/or in the at least one drivable zone is determined, in an exemplary embodiment, the vehicle is not routed along the at least one vehicle lane and/or through the at least one drivable zone.

In this way, according to exemplary embodiments of the various aspects of the present invention, the (non-) eligibility of the vehicle and/or of the one or more users of the vehicle to drive in the at least one vehicle lane and/or in the at least one drivable zone may be used for routing the vehicle in an advantageous manner.

For example, using a carpool lane (if the vehicle and/or the one or more users of the vehicle are eligible to use the carpool lane) may allow to reduce a route time for completing a desired route (e.g. because there may be less traffic on the carpool lane) and/or carbon emissions caused by the routed vehicle (e.g. because the vehicle may drive smoother on the carpool lane due to less traffic).

In addition, an overall usage of the at least one vehicle lane and/or of the at least one drivable zone may be increased, which may in turn reduce the overall carbon emissions associated with multiple vehicles being routed. For example, if vehicles that are eligible to use a carpool lane actually use the carpool lane, the traffic on non-carpool lanes may generally be reduced, thereby improving an overall traffic flow which may in turn lead to a reduction of the overall carbon emissions.

As used herein, routing a vehicle may comprise either or both of planning a route for the vehicle (and/or for the one or more users of the vehicle) and/or routing (e.g., navigating) the vehicle (and/or the one or more users of the vehicle). In an exemplary embodiment, routing or causing routing the vehicle thus comprises planning or causing planning a route for the vehicle and/or for the one or more users of the vehicle and/or routing or causing routing (e.g., navigating) the vehicle and/or the one or more users of the vehicle.

In an exemplary embodiment, the method further comprises:
- obtaining or causing obtaining information indicative of an availability of the at least one vehicle lane and/or of the at least one drivable zone; and
- routing or causing routing the vehicle based on the availability of the at least one vehicle lane and/or of the at least one drivable zone.

The availability of the at least one vehicle lane and/or of the at least one drivable zone may for example comprise or correspond to a spatial and/or temporal availability of the at least one vehicle lane and/or of the at least one drivable zone. In an exemplary embodiment, the availability of the at least one vehicle lane and/or of the at least one drivable zone comprises or corresponds to a (e.g. spatial) distance for which the at least one vehicle lane and/or the at least one drivable zone is available and/or a time duration for which the at least one vehicle lane and/or the at least one drivable zone is available (e.g., determined based on a current velocity of the vehicle).

In other words, in an exemplary embodiment, the availability of the at least one vehicle lane and/or of the at least one drivable zone (e.g. respectively) indicates how long the vehicle and/or the one or more users of the vehicle are able to use the at least one vehicle lane and/or the at least one drivable zone.

The information indicative of the availability of the at least one vehicle lane and/or of the at least one drivable zone may indicate said availability. To this end, in an exemplary embodiment, the information indicative of the availability comprises or corresponds to one or more (e.g. numerical) values indicative of the availability of the at least one vehicle lane and/or of the at least one drivable zone (e.g., a distance in kilometers, miles or any other suitable unit of length for which the at least one vehicle lane and/or drivable zone is available, and/or a time duration in minutes, seconds or any other suitable unit of time for which the at least one vehicle lane and/or drivable zone is available).

In an exemplary embodiment, obtaining or causing obtaining the information indicative of the availability of the at least one vehicle lane and/or of the at least one drivable zone comprises at least one of the following:
o determining or causing determining said information by the at least one apparatus performing the method (e.g. using onboard cameras, sensors or the like);
o retrieving or causing retrieving said information from a database (e.g., a map database); or
o receiving or causing receiving said information from at least one further (e.g. external) apparatus.

Thus, at least part of said information may be determined by the at least one apparatus performing the method, at least part of said information may be retrieved from a database, and/or at least part of said information may be received from at least one further apparatus. The at least one further (e.g. external) apparatus may correspond to at least one network entity such as at least one server (e.g. a routing server or a routing server cloud). For example, the at least one further apparatus may be integrated in the back end of a routing service providing company. The database (e.g., a map database) may for example be stored in a (e.g. internal) memory of the at least one apparatus performing the method or in a memory of the at least one further (e.g. external) apparatus.

Routing or causing routing the vehicle based on the availability of the at least one vehicle lane and/or of the at least one drivable zone may for instance comprise using the information indicative of the availability (e.g., said distance and/or time duration) for routing the vehicle. For example, the at least one vehicle lane and/or the at least one drivable zone may be used for (part of) a distance and/or for (part of) a time duration for which the at least one vehicle lane and/or the at least one drivable zone is available, e.g. based on determining that a route time and/or carbon emissions caused by the routed vehicle may thereby be reduced.

In this way, the information indicative of the availability of the at least one vehicle lane and/or of the at least one drivable zone may be used in combination with the determined eligibility of the vehicle and/or of the one or more users of the vehicle to drive in the at least one vehicle lane and/or in the at least one drivable zone to route the vehicle in a particularly advantageous manner (e.g., in the form of further reducing a route time and/or carbon emissions caused by the routed vehicle).

In an exemplary embodiment, the method further comprises:
- obtaining or causing obtaining traffic information indicative of traffic associated with the at least one vehicle lane and/or with the at least one drivable zone; and
- routing or causing routing the vehicle based on the traffic information.

The traffic information indicative of the traffic associated with (e.g. in) the at least one vehicle lane and/or associated with (e.g. in) the at least one drivable zone may for instance indicate one or more traffic conditions (e.g., traffic volume, traffic density, traffic frequency, or the like) associated with the at least one vehicle lane and/or with the at least one drivable zone.

To this end, in an exemplary embodiment, the traffic information comprises or corresponds to one or more (e.g. numerical) values indicative of the traffic associated with (e.g., in) the at least one vehicle lane and/or associated with (e.g., in) the at least one drivable zone (e.g., a total number of vehicles; a number of vehicles per kilometer, per mile, or per any other suitable unit of length; a number of vehicles per square-kilometer, per square-mile, or per any other suitable unit of area; a number of vehicles per minute, per hour, or per any other suitable unit of time).

In an exemplary embodiment, obtaining or causing obtaining the traffic information comprises determining or causing determining the traffic information by the at least one apparatus performing the method (e.g. using onboard cameras, sensors or the like), and/or receiving or causing receiving the traffic information from at least one further (e.g. external) apparatus. Thus, at least part of the traffic information may be determined by the at least one apparatus performing the method and/or at least part of the traffic information may be received from at least one further apparatus. The at least one further (e.g. external) apparatus may correspond to at least one network entity such as at least one server (e.g. a routing server or a routing server cloud). For example, the at least one further apparatus may be integrated in the back end of a routing service providing company.

Routing or causing routing the vehicle based on the traffic information may for instance comprise using the traffic information for routing the vehicle. For example, the at least one vehicle lane and/or the at least one drivable zone may be used (e.g., although there would be a shorter route without the at least one vehicle lane and/or the at least one drivable zone) based on determining that a route time and/or carbon emissions caused by the routed vehicle may be reduced when using the at least one vehicle lane and/or the at least one drivable zone, e.g. because a traffic associated with the at least one vehicle lane and/or with the at least one drivable zone is less than a traffic associated with alternative vehicle lanes and/or alternative drivable zones.

In this way, the traffic information may be used in combination with the determined eligibility of the vehicle and/or of the one or more users of the vehicle to drive in the at least one vehicle lane and/or in the at least one drivable zone to route the vehicle in a particularly advantageous manner (e.g., in the form of further reducing a route time and/or carbon emissions caused by the routed vehicle).

In an exemplary embodiment, the method further comprises:
- obtaining or causing obtaining passenger information associated with one or more potential passengers;
- determining or causing determining adjusted vehicle information based on the passenger information;
- determining or causing determining the eligibility of the vehicle and/or of the one or more users of the vehicle to drive in the at least one vehicle lane and/or in the at least one drivable zone based on the eligibility criteria information and the adjusted vehicle information; and
- routing or causing routing the vehicle based on the eligibility of the vehicle and/or of the one or more users of the vehicle to drive in the at least one vehicle lane and/or in the at least one drivable zone, and further based on the passenger information.

The one or more potential passengers may for instance comprise or correspond to one or more persons associated with a carpooling or carsharing platform (e.g., a carpooling or carsharing software application, service, website, etc.), and/or one or more persons intending to travel to a destination in a vicinity of a route along which the vehicle is being routed. The passenger information associated with the one or more potential passengers may for example be indicative of a number of the one or more potential passengers, of a respective (e.g. current) location of the one or more potential passengers, and/or of a respective destination of the one or more potential passengers.

In an exemplary embodiment, obtaining or causing obtaining the passenger information comprises receiving or causing receiving the passenger information from at least one further (e.g. external) apparatus such as a carpooling server or a carpooling server cloud, e.g. via a corresponding Application Programming Interface (API). Alternatively or in addition, the passenger information (in particular a number of the one or more potential passengers and/or a respective (e.g. current) location of the one or more potential passengers) may be determined or caused to be determined by the at least one apparatus performing the method (e.g. using onboard cameras, sensors or the like). Thus, at least part of the passenger information may be determined by the at least one apparatus performing the method and/or at least part of the passenger information may be received from at least one further apparatus.

In an exemplary embodiment, the adjusted vehicle information indicates a (e.g. hypothetical) number of users of the vehicle determined based on the (unadjusted) vehicle information indicating the number of (e.g. current) users of the vehicle and further based on the passenger information indicating a number of the one or more potential passengers. In other words, the adjusted vehicle information may reflect a (e.g. hypothetical) scenario in which one or more of the one or more potential passengers are picked up by the vehicle and/or by the one or more (e.g. current) users of the vehicle, thereby increasing the number of users of the vehicle.

Based on the adjusted vehicle information, the eligibility of the vehicle and/or of the one or more users of the vehicle to drive in the at least one vehicle lane and/or in the at least one drivable zone may then be determined or caused to be determined. In other words, the adjusted vehicle information may be used to determine whether or not the vehicle and/or the one or more users of the vehicle are eligible to drive in the at least one vehicle lane and/or in the at least one drivable zone. As a non-limiting example, after picking up some passengers, the vehicle and/or the user(s) of the vehicle may for instance be eligible to use a carpool lane which the vehicle and/or the user(s) were not eligible to use before.

Based on the eligibility of the vehicle and/or of the one or more users of the vehicle to drive in the at least one vehicle lane and/or in the at least one drivable zone, which eligibility has been determined based on said adjusted vehicle information, the vehicle may then be routed or caused to be routed.

For example, if it is determined (based on the eligibility criteria information and the adjusted vehicle information) that the vehicle and/or the one or more users of the vehicle are eligible to drive in the at least one vehicle lane and/or in the at least one drivable zone, the at least one vehicle lane and/or the at least one drivable zone may be used, at least in part, for routing the vehicle.

In this way, an eligibility of the vehicle and/or of the one or more users of the vehicle to drive in the at least one vehicle lane and/or in the at least one drivable zone may advantageously be manipulated (e.g. by picking up potential passengers) to route the vehicle in an even more advantageous manner (e.g., in the form of even further reducing a route time and/or carbon emissions caused by the routed vehicle).

For example, it may be determined that it is advantageous to pick up one or more potential passengers (despite a potential detour for picking up the passenger(s) and/or for taking the passenger(s) to their destination(s)) because after picking up the passenger(s), particular vehicle lanes and/or drivable zones (e.g., carpool lanes etc.) may be used, thereby reducing a route time and/or carbon emissions caused by the routed vehicle. Such an approach may be referred to as opportunistic carpooling.

In this exemplary embodiment, the vehicle is further routed or caused to be routed based on the passenger information (e.g., is routed such that the passenger(s) may be picked up at their current location and/or may be taken to their destination(s)). In other words, a detour may be taken to pick up the passenger(s) and/or to take the passenger(s) to their destination(s).

In an exemplary embodiment, the method further comprises:
- providing or causing providing at least one of the following to the one or more users of the vehicle, in particular by displaying or causing displaying a respective representation:
   o the eligibility criteria information;
   o the vehicle information;
   o information associated with the at least one vehicle lane and/or with the at least one drivable zone;
   o information indicative of the eligibility of the vehicle and/or of the one or more users of the vehicle to drive in the at least one vehicle lane and/or in the at least one drivable zone;
   o a travel metric associated with the route comprising at least part of the at least one vehicle lane and/or of the at least one drivable zone;
   o a travel metric associated with the route that does not comprise the at least one vehicle lane and/or the at least one drivable zone;
   o information associated with the at least one traffic sign associated with the at least one vehicle lane and/or with the at least one drivable zone;
   o information associated with the at least one traffic light associated with the at least one vehicle lane and/or with the at least one drivable zone;
   o information associated with the location associated with the at least one vehicle lane and/or with the at least one drivable zone;
   o the information indicative of the availability of the at least one vehicle lane and/or of the at least one drivable zone;
   o the traffic information; or
   o the passenger information.

Thus, in an exemplary embodiment, the method further comprises displaying or causing displaying a respective (e.g. visual) representation of at least one of the above elements to the one or more users of the vehicle, e.g. on a display of the at least one apparatus performing the method. In an exemplary embodiment, displaying or causing displaying, in particular to a user of the vehicle, respective representations comprises providing corresponding display information to at least one display and, based on the display information, displaying the respective representations on the at least one display.

Thus, in an exemplary embodiment, the respective representation is a graphical representation. In an exemplary embodiment, the at least one display is part of or is comprised by the vehicle. For example, the at least one display may be part of (e.g., may be integrated into) an infotainment system of the vehicle. Alternatively or in addition, in an exemplary embodiment, the at least one display is the display of at least one mobile device (e.g. an IoT device, a smartphone, a tablet computer, a notebook computer, a smart watch, or a smart band) of a user of the vehicle (e.g., a driver or a passenger of the vehicle), or a mobile device at least located in the vehicle.

In an exemplary embodiment, displaying or causing display the respective representation(s) to a user of the vehicle (e.g., a driver or passenger of the vehicle) means that the respective representation(s) are displayed such that a user of the vehicle is able to perceive (e.g., see) the respective representation(s). In an exemplary embodiment, plural respective representations are (caused to be) displayed together.

Alternatively or in addition, in an exemplary embodiment, a respective acoustic representation of at least one of the above elements may be provided to the one or more users of the vehicle (e.g., as an acoustic message or announcement), e.g. using an audio device comprised by the at least one apparatus performing the method (e.g., an audio device comprised by the vehicle, for instance by an infotainment system of the vehicle), an audio device comprised by at least one mobile device of a user of the vehicle or a mobile device at least located in the vehicle.

Further, alternatively or in addition, in an exemplary embodiment, at least one of the above elements may be provided to the one or more users of the vehicle as a text message. The text message may for example be provided to the at least one apparatus performing the method or to at least one mobile device of a user of the vehicle or a mobile device at least located in the vehicle.

A respective representation of a respective one of the above elements may depend on the type of information represented. For example, if the information comprises a (e.g. numerical) value, the representation may in an exemplary embodiment comprise a graphical representation of said (numerical) value, e.g. by displaying the value, a corresponding scale, for example a color scale, or the like. If the information comprises text information (e.g., one or more strings), the representation may in an exemplary embodiment correspond to a graphical representation of said text information, e.g. by displaying the one or more strings.

The information associated with the at least one vehicle lane and/or with the at least one drivable zone may comprise or may correspond to information indicative of (e.g., about) any aspect of the at least one vehicle lane and/or of the at least one drivable zone (e.g., location, spatial dimensions, etc.).

The information indicative of the eligibility of the vehicle and/or of the one or more users of the vehicle to drive in the at least one vehicle lane and/or in the at least one drivable zone may indicate said eligibility, and may comprise corresponding text information (e.g., one or more strings) and/or corresponding (e.g. numerical) values.

The travel metric associated with the route comprising at least part of the at least one vehicle lane and/or of the at least one drivable zone may for instance comprise or correspond to a route time, a route distance and/or an amount of carbon emissions associated with said route comprising at least part of the at least one vehicle lane and/or of the at least one drivable zone.

Similarly, the travel metric associated with the route that does not comprise the at least one vehicle lane and/or the at least one drivable zone may comprise or correspond to a route time, a route distance and/or an amount of carbon emissions associated with said route that does not comprise the at least one vehicle lane and/or the at least one drivable zone.

The information associated with the at least one traffic sign may comprise or may correspond to information indicative of (e.g., about) any aspect of the at least one traffic sign (e.g., location, spatial dimensions, etc.). Similarly, the information associated with the at least one traffic light may comprise or may correspond to information indicative of (e.g., about) any aspect of the at least one traffic light (e.g., location, spatial dimensions, etc.).

The information associated with the location associated with the at least one vehicle lane and/or with the at least one drivable zone may be indicative of a location associated with the at least one vehicle lane and/or with the at least one drivable zone.

It is to be understood that the presentation of the invention in this section is merely by way of examples and non-limiting.

Other features of the invention will become apparent from the following detailed description considered in conjunction with the accompanying figures. It is to be understood, however, that the figures are designed solely for purposes of illustration and not as a definition of the limits of the invention, for which reference should be made to the appended claims. It should be further understood that the figures are not drawn to scale and that they are merely intended to conceptually illustrate the structures and procedures described herein.

### BRIEF DESCRIPTION OF THE FIGURES

- Fig. 1: is a schematic illustration of an exemplary application scenario of exemplary embodiments of the first aspect of the invention;
- Fig. 2: is a flowchart illustrating an example of a method according to the first aspect of the invention;
- Fig. 2A: is a flowchart illustrating exemplary embodiments of the method of Fig. 2;
- Fig. 3: is a block diagram of an example of an apparatus according to the first aspect of the invention;
- Fig. 4: is a schematic illustration of examples of tangible storage media according to the first aspect of the invention.

### DETAILED DESCRIPTION OF THE FIGURES

The following description serves to deepen the understanding of the present invention and shall be understood to complement and be read together with the description of example embodiments of the invention as provided in the above SUMMARY section of this specification.

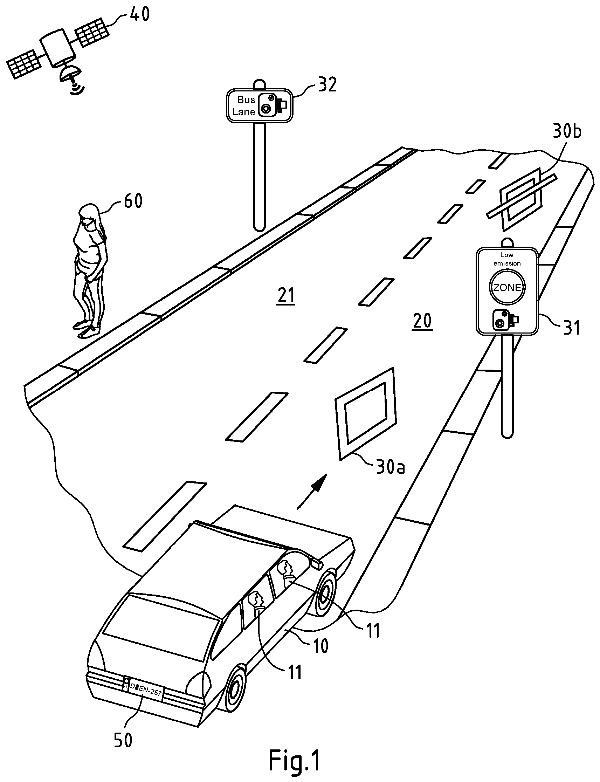

Fig. 1 schematically illustrates an exemplary application scenario of exemplary embodiments of the first aspect of the invention. As illustrated in Fig. 1, a vehicle 10 drives in a first vehicle lane 20 of a road comprising the first vehicle lane 20 and a second vehicle lane 21.

As illustrated in Fig. 1, vehicle 10 approaches a road marking 30a (an example of a traffic sign). Road marking 30a may for example indicate a carpool lane (an example of the at least one vehicle lane), e.g. a vehicle lane to be used only by vehicles with at least two users. Thus, road marking 30a may for example indicate that only vehicles with at least two users are eligible to drive in the first vehicle lane 20 (an example of the at least one eligibility criterion).

In the scenario illustrated in Fig. 1, there may be one driver (not visible in Fig. 1) and two passengers 11 in the vehicle 10 such that a number of users of the vehicle 10 indicated by corresponding vehicle information may be three (an example of vehicle information being indicative of one or more users of the vehicle).

Thus, it may be determined that vehicle 10 and/or the one or more users of vehicle 10 are eligible to drive in the first vehicle lane 20 (an example of determining an eligibility of the vehicle and/or of the one or more users of the vehicle to drive in a vehicle lane based on the eligibility criteria information and the vehicle information).

Vehicle 10 and/or the one or more users of vehicle 10 may thus be routed along the first vehicle lane 20, also after passing over road marking 30a (an example of routing a vehicle based on the eligibility of the vehicle and/or of one or more users of the vehicle).

As further illustrated in Fig. 1, vehicle 10 also approaches a road sign 31 (a further example of a traffic sign). Road sign 31 exemplarily indicates a low-emission zone (an example of the at least one drivable zone), e.g. a zone to be used only by vehicles satisfying predetermined emission criteria. Thus, road sign 31 may for example indicate that only vehicles satisfying predetermined emission criteria are eligible to drive in the first vehicle lane 20 (a further example of the at least one eligibility criterion).

In the scenario illustrated in Fig. 1, vehicle 10 may satisfy the predetermined emission criteria applicable to the low-emission zone indicated by road sign 31 and this may be indicated by corresponding vehicle information (an example of vehicle information being indicative of at least one characteristic of the vehicle).

Thus, it may be determined that the vehicle 10 and/or the one or more users of the vehicle are eligible to drive in the low-emission zone indicated by road sign 31 (a further example of determining an eligibility of the vehicle and/or of the one or more users of the vehicle to drive in a vehicle lane based on the eligibility criteria information and the vehicle information).

Vehicle 10 and/or the one or more users of vehicle 10 may thus be routed through the low-emission zone indicated by road sign 31 (a further example of routing a vehicle based on the eligibility of the vehicle and/or of one or more users of the vehicle to drive in the at least one vehicle lane).

As further illustrated in Fig. 1, vehicle 10 also approaches a road sign 32 (a further example of a traffic sign), which is located at the roadside of the second vehicle lane 21. Road sign 32 exemplarily indicates a bus lane, e.g. a vehicle lane to be used only by buses (a further example of the at least one eligibility criterion).

In the scenario illustrated in Fig. 1, vehicle 10 is not a bus (vehicle 10 may e.g. be considered a limousine car) which may be indicated by corresponding vehicle information (a further example of vehicle information being indicative of at least one characteristic of the vehicle).

Thus, it may be determined that vehicle 10 and/or the one or more users of vehicle 10 are not eligible to drive in the second vehicle lane 21 (a further example of determining an eligibility of the vehicle and/or of the one or more users of the vehicle to drive in a vehicle lane based on the eligibility criteria information and the vehicle information).

Vehicle 10 and/or the one or more users of vehicle 10 may thus not be routed along the second vehicle lane 21, at least not after passing road sign 32 (a further example of routing a vehicle based on the eligibility of the vehicle and/or of one or more users of the vehicle).

By determining the eligibility of vehicle 10 and/or of the users of vehicle 10 to drive in the first vehicle lane 20, in the second vehicle lane 21 and/or in the low-emission zone indicated by road sign 31, and by routing vehicle 10 based thereon, the eligibility of vehicle 10 and/or of the users of vehicle 10 to use said lanes and said zone is advantageously taken into account when routing the vehicle.

This may allow for an enhanced routing of vehicle 10 (e.g., in the form of reducing a route time, a route distance and/or carbon emissions caused by vehicle 10). In addition, this may allow for an increased overall usage of the first vehicle lane 20, the second vehicle lane 21 and/or the low-emission zone indicated by road sign 31, thereby reducing the overall carbon emissions associated with vehicles being routed, e.g. in a city or region comprising said lanes and/or said zone (e.g. by improving an overall traffic flow in said city or region).

The eligibility criteria information indicative of a respective example eligibility criterion associated with a respective one of road marking 30a, road sign 31 and road sign 32 may be obtained as further described herein.

For example, the eligibility criteria information may be obtained based on traffic sign information representative of at least one image of road marking 30a, road sign 31 and/or road sign 32, e.g. using a camera comprised by vehicle 10 (an example of obtaining eligibility criteria information based on traffic sign information).

Alternatively or in addition, the eligibility criteria information may for example be obtained based on respective location information respectively associated with a respective location respectively associated with the first vehicle lane 20, the second vehicle lane 21 and the low-emission zone indicated by road sign 31 (an example of obtaining eligibility criteria information based on location information).

Said location respectively associated with the first vehicle lane 20, the second vehicle lane 21 and the low-emission zone indicated by road sign 31 may further be associated with a location of vehicle 10, e.g. due to vehicle 10 driving on or approaching the first vehicle lane 20, the second vehicle lane 21 and the low-emission zone indicated by road sign 31. The location information may for instance be received from at least one further (e.g. external) apparatus (e.g., via a GNSS 40 or the like).

Obtaining a respective image of road marking 30a, road sign 31 and/or road sign 32, and/or obtaining respective location information associated with the first vehicle lane 20, the second vehicle lane 21 or the low-emission zone indicated by road sign 31 may trigger the method according to the first aspect (an example of the method being performed based on obtaining said information).

As illustrated in Fig. 1, vehicle 10 has a number plate 50 with an alphanumeric identifier (an example of vehicle identification information identifying the vehicle). Based on the information on number plate 50, vehicle information indicative of at least one characteristic of vehicle 10 may be retrieved from a database, e.g. by a routing server or a routing server cloud routing vehicle 10 (an example of retrieving vehicle information from a database based on vehicle identification information).

Road marking 30b may indicate an end of a portion of the first vehicle lane 20 for which the first vehicle lane 20 is a carpool lane (a start of said portion may be indicated by road marking 30a). Thus, road markings 30a, 30b may together indicate a spatial and/or temporal availability of said carpool lane, as further described herein.

As illustrated in Fig. 1, a potential passenger 60 standing at the roadside of the second vehicle lane 21 may be associated with a carpooling or carsharing platform (e.g., a carpooling or carsharing software application, service, website, etc.) and/or may intend to travel to a destination in a vicinity of a route along which vehicle 10 is currently being routed. It may be determined that it would be advantageous to pick up potential passenger 60 (despite a potential detour for picking up passenger 60 and/or for taking passenger 60 to their destination) because after picking up potential passenger 60, particular vehicle lanes and/or drivable zones (e.g., a carpool lane) may be used (an example of routing the vehicle based on an eligibility having been determined based on adjusted vehicle information).

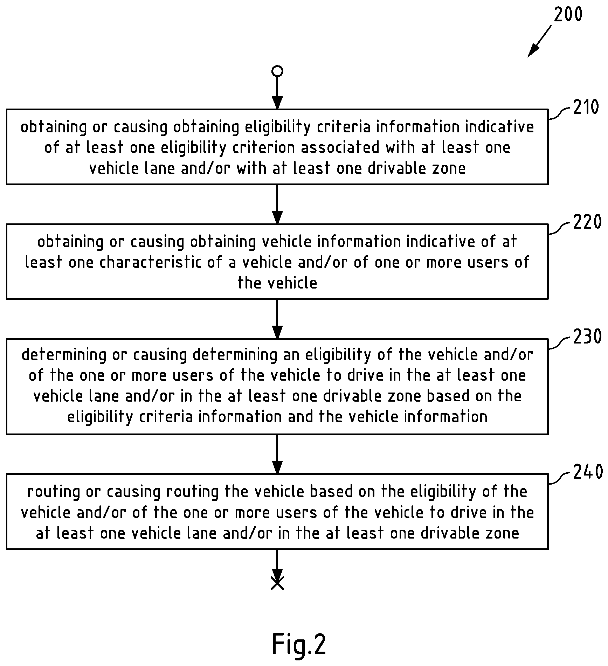

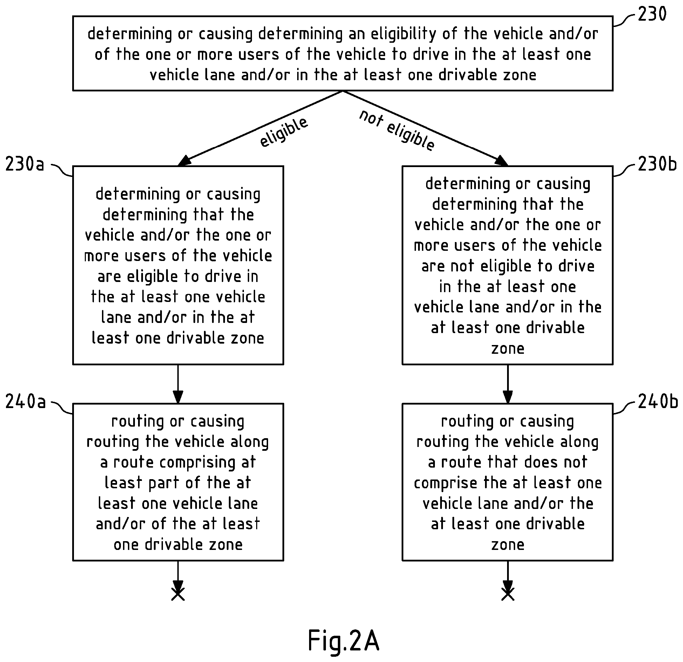

Fig. 2 is a flowchart schematically illustrating an example of a method 200 according to the first aspect of the invention. In a first step, eligibility criteria information indicative of at least one eligibility criterion associated with at least one vehicle lane and/or with at least one drivable zone is obtained or caused to be obtained (step 210). Then, vehicle information indicative of at least one characteristic of a vehicle and/or of one or more users of the vehicle is obtained or caused to be obtained (step 220). Based on the eligibility criteria information and the vehicle information, an eligibility of the vehicle and/or of the one or more users of the vehicle to drive in the at least one vehicle lane and/or in the at least one drivable zone is determined or caused to be determined (step 230). Based on the eligibility of the vehicle and/or of the one or more users of the vehicle to drive in the at least one vehicle lane and/or in the at least one drivable zone, the vehicle is routed or caused to be routed (step 240).

Fig. 2A is a flowchart schematically illustrating exemplary embodiments of method 200, in particular of steps 230 and 240. As mentioned, in step 230, an eligibility of the vehicle and/or of the one or more users of the vehicle to drive in the at least one vehicle lane and/or in the at least one drivable zone is determined or caused to be determined based on the eligibility criteria information and the vehicle information.

Now, if it is determined or caused to be determined that the vehicle and/or the one or more users of the vehicle are eligible to drive in the at least one vehicle lane and/or in the at least one drivable zone (step 230a), the vehicle is routed or caused to be routed along a route comprising at least part of the at least one vehicle lane and/or of the at least one drivable zone (step 240a).

If it is on the other hand determined or caused to be determined that the vehicle and/or the one or more users of the vehicle are not eligible to drive in the at least one vehicle lane and/or in the at least one drivable zone (step 230b), the vehicle is routed or caused to be routed along a route that does not comprise the at least one vehicle lane and/or the at least one drivable zone (step 240b).

In particular in this way, the (non-)eligibility of the vehicle and/or of the one or more users of the vehicle to drive in the at least one vehicle lane and/or in the at least one drivable zone may be used for routing the vehicle in an advantageous manner, as further described herein.

It may be considered an objective of various exemplary embodiments of the present disclosure to provide (e.g., real-time and/or context-aware) assistance by a routing or navigation system that may help drivers to use particular (or specialized) lanes and/or zones. The system may not only inform users of their eligibility based on the vehicle information but may in particular calculate time-saving benefits and show an availability of such lanes and/or zones for optimized route planning.

Various exemplary embodiments of the present disclosure may therefore be understood to provide a routing or navigation system that may help users of a vehicle to contextually identify and use their eligibility for specialized map features such as carpool lanes, electric vehicle lanes, low-emission zones etc. By using real-time data on vehicle occupancy, vehicle type, traffic conditions, local regulations etc., the routing or navigation system may provide potential benefits, such as time savings and/or lane availability.

In other words, a routing or navigation system according to the various exemplary embodiments of the present disclosure may be understood to represent a contextual assistance system for user eligibility to specialized map features and attributes (e.g., vehicle lanes and/or drivable zones).

The following example implementations relating to various aspects of exemplary embodiments of the present disclosure are also disclosed:
Example implementation 1: User-initiated inquiries about eligibility for specialized lanes/zones, sign recognition, and contextual lane identification using onboard cameras and map data.
Example implementation 2: Dual validation of eligibility through vehicle and passenger data.
Example implementation 3: Real-time traffic-based suggestions for optimized use of lanes, including estimated time savings and lane availability.
Example implementation 4: Visual reinforcement of road signs and explanations.
Example implementation 5: Opportunistic integration with carpooling and smart parking systems, enhancing shared mobility and eco-friendly driving options.

### Example implementation 1: User-Initiated Eligibility Inquiry for Specialized Lanes/Zones

This example implementation may provide drivers with real-time responses to their eligibility requests about specialized lanes/zones, reducing possible user confusion and ensuring compliance. This example implementation may comprise one or more or all of the following steps:
1. In-App Inquiry Option:
   o The navigation system may allow the user to manually request about their eligibility for a specific lane or zone via a dedicated "Eligibility Check" button on the screen. Users may be able to request their eligibility by voice commands
2. Signage Recognition and Contextual Check:
   o The system may identify the road sign either through:
      ▪ Camera recognition: Onboard cameras may capture the road sign and may match it with **the system's sign database.**
      ▪ Map-based data: GPS-based map data may identify the type of lane or zone based on the **user's location.**
   ∘ If the user is unaware of the meaning of a sign, the user may be able to select the sign from a set of common icons, or the system may auto-detect the sign.
3. Vehicle and Passenger Data Verification:
   o For carpool lanes, the system may check seat occupancy sensors or internal cameras to count the number of passengers. For EV lanes or low-emission zones, the system may retrieve a vehicle type and/or an emission status, e.g. from a diagnostic system (e.g., OBD-II) of the vehicle or via external vehicle recognition systems (e.g., license plate matching with an EV database).
4. Eligibility Feedback and Sign Explanation:
   o The system may cross-reference the detected sign or lane with local regulations, returning an eligibility statement along with an explanation of the sign.
      ▪ Example 1: "This sign indicates a carpool lane for vehicles with two or more passengers. You have 2 passengers, so you are eligible for this lane."
      ▪ Example 2: "This is a low-emission zone, and your vehicle does not meet the emission requirements for entry."
5. Alternative Routes if Ineligible:
   o If the user is not eligible for the lane, the system may suggest alternative routes or lanes to avoid penalties or violations.
      ▪ Example: "This lane is reserved for electric vehicles. Since your vehicle is not electric, continue in the current lane. No significant time loss is expected."

Beneficially, this example implementation may provide to users or may use context-aware clarifications on unfamiliar signs, lanes and/or zones (e.g. using LLMs). With real-time feedback on eligibility, the system may reduce confusion and may help to avoid fines. The ability of LLMs to process and interpret (also) complex sign contexts and/or local regulations may make this approach particularly effective, e.g. for cross-border travelers or drivers navigating unfamiliar regions.

### Example implementation 2: Dual Validation for Legal Compliance

This example implementation may combine real-time map data and vehicle attributes to ensure compliance with local regulations (e.g., to avoid fines). This example implementation may comprise one or more or all of the following steps:
1. Cartographic Lane Identification:
   o The system may use GPS and mapping data to identify when a vehicle is approaching a specialized lane (e.g., carpool, EV, low-emission). The lane type may be determined based on **the lane's geolocation and**/or the corresponding regional regulations.
2. Onboard Sensor Validation:
   o Sensors of the vehicle may validate the necessary data:
      ▪ For carpool lanes: Seat occupancy sensors or internal cameras count passengers.
      ▪ For EV or LEZ lanes: The system may retrieve vehicle emission status from internal state, API or from OBD-II system or external recognition systems, such as a license plate reader.
3. Cross-Validation:
   o The system may compare the eligibility criteria (from the map data) with real-time vehicle data to determine compliance.
      ▪ Example: If the carpool lane requires at least 2 passengers, and the system detects 2 or more, it confirms eligibility.
4. Legal Compliance Notification:
   o The driver may be notified with a clear message confirming their legal compliance:
      ▪ Example: "You are eligible to use the carpool lane for the next 5 km."
      ▪ Example: "Your vehicle qualifies for the low-emission zone entry. Proceed through this zone without restrictions."

Beneficially, this example implementation may enable dual validation by cross-referencing map data, vehicle attributes, and local rules (e.g. using LLMs), in particular in real time, ensuring compliance and avoiding fines. This may be particularly effective in regions with strict traffic rule enforcement.

### Example implementation 3: Dynamic Time-Saving and Lane Availability Suggestions

This example implementation may optimize routing or traveling a route by calculating time-saving benefits and providing lane availability updates, using real-time traffic data. This example implementation may comprise one or more or all of the following steps:
1. Traffic Data Collection:
   o The system may continuously gather real-time traffic data, e.g. through APIs or partnerships with local traffic monitoring services. The system may monitor congestion levels, lane speed, estimated delays, etc.
2. Eligibility Check and Real-Time Calculation:
   o After confirming an eligibility of a driver for a specialized lane, the system may calculate the time-saving benefits of switching to the lane based on current traffic conditions.
      ▪ Example: "Using the carpool lane will save you 15 minutes based on current traffic."
3. Lane Availability Feedback:
   o The system may inform the driver how long they can stay in the specialized lane. This may be particularly useful when lanes merge into regular traffic:
      ▪ Example: "This lane is available to you for the next 6 km before it merges back into the main highway."
4. User Notification with Real-Time Benefits:
   o The driver may receive a notification that may include:
      ▪ their eligibility;
      ▪ expected time savings; and/or
      ▪ a distance the user may continue to use the specialized lane.
      ▪ Example: "You are eligible for the carpool lane, which will save you 12 minutes. You can use this lane for the next 6 km."

Beneficially, this example implementation may analyze traffic data and eligibility criteria (e.g. using LLMs), in particular in real time, allowing for more efficient route decisions. By determining and using time-saving benefits and lane availability, this example implementation may maximize a usage of specialized lanes, allowing for enhanced (e.g. faster) travel.

### Example implementation 4: Visual Education and Trust Enhancement

This example implementation may provide explanations of traffic signs and/or rules, improving certainty of a driver and allowing for enhanced compliance with local traffic laws. This example implementation may comprise one or more or all of the following steps:
1. Signage Database:
   o The system may include a database of traffic signs, e.g. specific to the country and/or region, for instance with visual representations of the signs and explanations thereof.
2. Signage Display and Explanation:
   o When the driver inquires about a sign or a lane, the system may display the corresponding traffic sign alongside an explanation of what the traffic sign means.
      ▪ Example: "This is a carpool lane, indicated by the diamond symbol. It is reserved for vehicles with two or more passengers."
3. User Feedback Loop:
   o Drivers may be able to provide feedback on a recognition accuracy of the system, allowing the system to improve sign detection and explanations in future updates.

Beneficially, this example implementation may inform drivers about local traffic regulations, providing the drivers with enhanced certainty as to using specialized lanes, even in unfamiliar areas. Visual explanations may reduce uncertainty and help drivers to comply with unfamiliar rules.

### Example implementation 5: Opportunistic Carpooling

This example implementation may help drivers to find passengers in real-time to qualify for carpool lanes, which may enable faster, more environmental-friendly travel and may provide time savings. This example implementation may comprise one or more or all of the following steps:
1. Contextual Passenger Matching:
   o When a driver approaches a carpool lane, the system may use APIs to integrate with carpooling platforms and may check for nearby passengers seeking a ride in the same direction.
   ∘ The system may display potential passengers on the driver's route and may suggest optimized pickup points based on real-time traffic and passenger availability.
2. Real-Time Notifications:
   o Drivers may receive alerts about available passengers nearby who could help them qualify for the carpool lane.
   ∘ Passengers may be notified of the driver's estimated arrival time and pickup location.
3. In-Vehicle Guidance:
   o The navigation system may provide step-by-step directions to the pickup point and may offer updates if passengers confirm or cancel a request, e.g. in real time.

Beneficially, this example implementation may increase usage of shared mobility by supporting drivers to qualify for, e.g., carpool lanes while reducing traffic congestion and/or an environmental impact of vehicle routing. LLMs may further facilitate this process by dynamically matching drivers with nearby passengers, interpreting route contexts, and providing real-time guidance to ensure a straightforward and efficient carpooling. By encouraging such opportunistic carpooling, environment-friendly travel may be supported and a usage of, e.g., underutilized carpool lanes may be increased.

One or more of the above example implementations may further comprise one or more of the following:
- Informing about change in a passenger count (e.g. due to pick up or drop off of a person) and eligibility to certain **"services" change during a trip:**
   o As an example, a person on a trip may drop some passengers on the way and may not be eligible any more to HOV lanes but may fail to notice due to a lack of attention, e.g. if a large part of the trip was done with a different setting. In this case, a reminder by the system may be beneficial, e.g.: **"You are now the single passenger (or 2 passengers when HOV requires 3) in** the car and although there are some carpooling lanes available to your destination, you are not **any more eligible to such lanes". Such message** might **only be triggered in case of a "status change" and if "relevant",** e.g. if there are still HOV lanes to be possibly used to the destination.
- Informing about possible negative consequences of taking a specific lane in a given context:
   o Example information text: **"Taking this HOV lane or EV dedicated lane might save you 2** minutes ETA but you will need to merge back in dense traffic in 1 km and cross three lanes to take a direction on the left".
   ∘ Further example information text: "Given your current destination, it might be wiser not to use **that lane you would be eligible to".**
- Summarizing a gain related to a usage of specific lanes after a trip, e.g. in order to increase usage of specific lanes (for instance in post-trip analytics or related insights):
   o Example information text: **"Taking the HOV lanes made you gain 12** min overall on your trip, in **addition to saving X amount of CO2 and reducing traffic in the city".**
- Referring to past inquiries made by a user, e.g. to enhance user certainty:
   o **Example information text:** "This sign here is the same as you saw 2 weeks ago in Bordeaux area, it indicates a car-pooling lane available with two or more people like in your current situation".
- LLM based inquiries:
   o In particular using LLMs, vehicle users may request an assistant, e.g.: "Why is this lane free?", "Why is nobody taking this lane?", **etc.**
   o Assistants may reply to such user requests, e.g.: **"this additional lane on the right side recently** opened one month ago and although a good portion of drivers could take this HOV lane, it seems most drivers are unaware of it and afraid to take it as it lays where generally an **emergency lane is present, but no worries, you can use it" (when this is true).**

The above example implementations may offer in particular one or more of the following:
Real-time guidance for drivers to identify eligibility for specialized lanes and zones, reducing driver confusion and/or penalties;
Personalized feedback based on passenger count, vehicle type, and local regulations;
Enhanced user certainty, e.g. combined with visual sign explanations and compliance checks;
Enhanced routing, e.g. by calculating time savings and lane availability;
Increasing shared mobility and eco-friendly driving, e.g. through carpooling and smart parking integrations;
Improved engagement with navigation systems, e.g. by offering context-aware eligibility information;
Reduced traffic congestion, e.g. by increasing a usage of underutilized lanes and zones;
Supporting traffic sustainability, e.g. by encouraging carpooling, electric vehicle use, entry into low-emission zones, etc.;
Interfacing with carpooling platforms and/or smart infrastructure providers;
Improving navigation services, e.g. by offering real-time eligibility and optimization information.

In accordance with the above example implementations, exemplary embodiments of the present disclosure may use Large Language Models (LLMs) in one or more respective method steps.

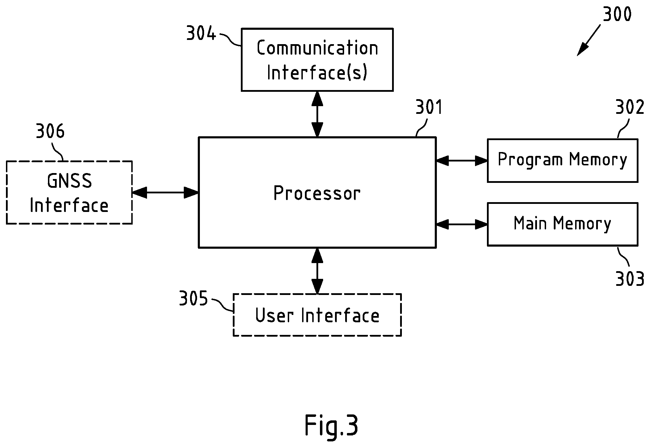

Fig. 3 is a block diagram of an example of an apparatus 300 according to the first aspect of the invention and/or of the at least one further apparatus (as further described herein).

Apparatus 300 comprises a processor 301. Processor 301 may represent a single processor or two or more processors, which are for instance at least partially coupled, for instance via a bus. Processor 301 may use program memory 302 and main memory 303 to execute a program code stored in program memory 302 (for instance program code causing apparatus 300 to perform embodiments of the different methods disclosed herein, when executed on processor 301). Some or all of memories 302 and 303 may also be included into processor 301. One of or both of memories 302 and 303 may be fixedly connected to processor 301 or at least partially removable from processor 301. Program memory 302 may for instance be a non-volatile memory. It may for instance be a FLASH memory, any of a ROM, PROM, EPROM and EEPROM memory or a hard disc, to name but a few examples. Program memory 302 may also comprise an operating system for processor 301. Main memory 303 may for instance be a volatile memory. It may for instance be a RAM or DRAM memory, to give but a few non-limiting examples. It may for instance be used as a working memory for processor 301 when executing an operating system and/or programs.

Processor 301 further controls one or more communication interfaces 304 configured to receive and/or send information. For instance, apparatus 300 may be configured to communicate with a server (e.g. a routing server or a routing server cloud). Such a communication may for instance comprise providing (transmitting) information from apparatus 300 to the server, or vice versa. The communication may for instance be based on a (e.g. partly) wireless connection. The communication interface 304 may thus comprise circuitry such as modulators, filters, mixers, switches and/or one or more antennas to allow transmission and/or reception of radio signals. In embodiments of the invention, communication interface 304 is inter alia configured to allow communication according to a 2G/3G/4G/5G cellular communication system and/or a non-cellular communication system, such as for instance a WLAN network and/or a Bluetooth network.

Processor 301 further controls a user interface 305 configured to present information to a user of apparatus 300 and/or to receive information from such a user. User interface 305 may for instance be the standard user interface via which a user of apparatus 300 controls other functionality thereof, such as making phone calls, browsing the Internet, etc.

Processor 301 may further control a GNSS interface 306 configured to receive position information of a GNSS (Global Navigation Satellite System) such as Global Positioning System (GPS), Galileo, Global Navigation Satellite System (i.e. "Globalnaja Nawigazionnaja Sputnikowaja Sistema", GLONASS) or Quasi-Zenith Satellite System (QZSS). In case of apparatus 300, the location information of GNSS interface 306 (potentially in connection with further sensors of apparatus 300, such as an inertial sensor, an accelerometer or gyroscope) may be used in order to obtain location information, e.g. indicative of a location of the vehicle, as further described herein.

The components 302-306 of apparatus 300 may for instance be connected with processor 301 by means of one or more serial and/or parallel busses.

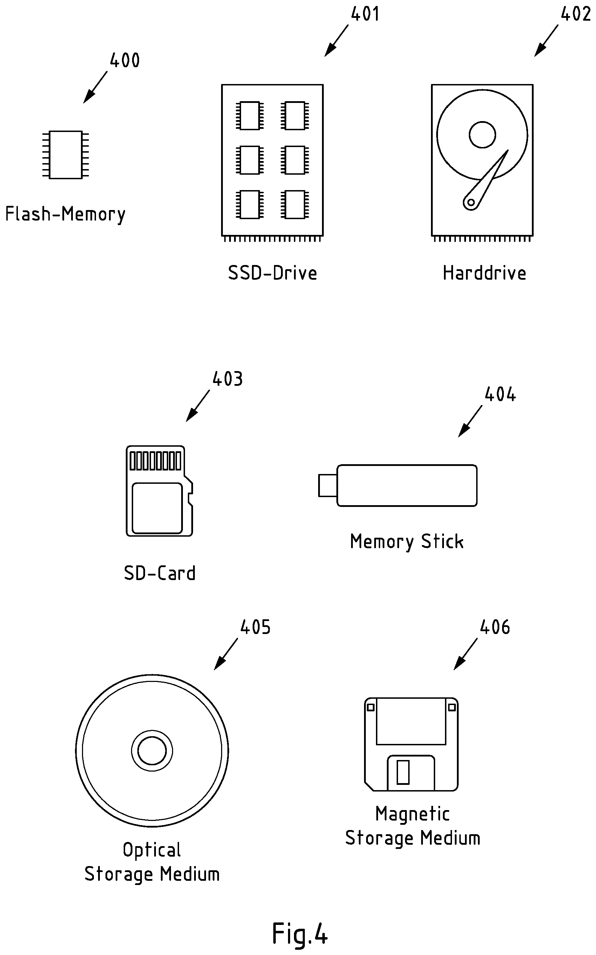

Fig. 4 schematically illustrates examples of tangible and non-transitory computer-readable storage media according to the first aspect of the invention that may for instance be used to implement memory 302 of Fig. 3. To this end, Fig. 4 displays a flash memory 400, which may for instance be soldered or bonded to a printed circuit board, a solid-state drive 401 comprising a plurality of memory chips (e.g. Flash memory chips), a magnetic hard drive 402, a Secure Digital (SD) card 403, a Universal Serial Bus (USB) memory stick 404, an optical storage medium 405 (such as for instance a CD-ROM or DVD) and a magnetic storage medium 406.

The following example embodiments of the invention are also disclosed:

### Embodiment 1

A method performed by at least one apparatus, the method comprising:
- obtaining or causing obtaining eligibility criteria information indicative of at least one eligibility criterion associated with at least one vehicle lane and/or with at least one drivable zone;
- obtaining or causing obtaining vehicle information indicative of at least one characteristic of a vehicle and/or of one or more users of the vehicle;
- determining or causing determining an eligibility of the vehicle and/or of the one or more users of the vehicle to drive in the at least one vehicle lane and/or in the at least one drivable zone based on the eligibility criteria information and the vehicle information; and
- routing or causing routing the vehicle based on the eligibility of the vehicle and/or of the one or more users of the vehicle to drive in the at least one vehicle lane and/or in the at least one drivable zone.

### Embodiment 2

The method of embodiment 1,
- wherein determining or causing determining the eligibility of the vehicle and/or of the one or more users of the vehicle to drive in the at least one vehicle lane and/or in the at least one drivable zone comprises determining or causing determining that the vehicle and/or the one or more users of the vehicle are eligible to drive in the at least one vehicle lane and/or in the at least one drivable zone; and
- wherein routing or causing routing the vehicle based on the eligibility of the vehicle and/or of the one or more users of the vehicle to drive in the at least one vehicle lane and/or in the at least one drivable zone comprises routing or causing routing the vehicle along a route comprising at least part of the at least one vehicle lane and/or of the at least one drivable zone.

### Embodiment 3

The method of embodiment 1,
- wherein determining or causing determining the eligibility of the vehicle and/or of the one or more users of the vehicle to drive in the at least one vehicle lane and/or in the at least one drivable zone comprises determining or causing determining that the vehicle and/or the one or more users of the vehicle are not eligible to drive in the at least one vehicle lane and/or in the at least one drivable zone; and
- wherein routing or causing routing the vehicle based on the eligibility of the vehicle and/or of the one or more users of the vehicle to drive in the at least one vehicle lane and/or in the at least one drivable zone comprises routing or causing routing the vehicle along a route that does not comprise the at least one vehicle lane and/or the at least one drivable zone.

### Embodiment 4

The method of any of embodiments 1 to 3, wherein obtaining or causing obtaining the eligibility criteria information comprises:
- obtaining or causing obtaining at least one of the following:
   o traffic sign information associated with at least one traffic sign associated with the at least one vehicle lane and/or with the at least one drivable zone,
   o traffic light information associated with at least one traffic light associated with the at least one vehicle lane and/or with the at least one drivable zone, or
   o location information associated with a location associated with the at least one vehicle lane and/or with the at least one drivable zone; and
- obtaining or causing obtaining the eligibility criteria information based on the traffic sign information, based on the traffic light information and/or based on the location information.

### Embodiment 5

The method of embodiment 4, wherein the traffic sign information is representative of at least one image of the at least one traffic sign and/or wherein the traffic light information is representative of at least one image of the at least one traffic light.

### Embodiment 6

The method of any of embodiments 4 or 5, wherein the location information is further associated with a location of the vehicle.

### Embodiment 7

The method of any of embodiments 1 to 6, wherein the method is performed based on obtaining or causing obtaining at least one of the following:
o traffic sign information associated with at least one traffic sign associated with the at least one vehicle lane and/or with the at least one drivable zone;
o traffic light information associated with at least one traffic light associated with the at least one vehicle lane and/or with the at least one drivable zone;
o location information associated with a location associated with the at least one vehicle lane and/or with the at least one drivable zone;
o an indication of a driving maneuver associated with the at least one vehicle lane and/or with the at least one drivable zone; or
o a user request.

### Embodiment 8

The method of any of embodiments 1 to 7, wherein obtaining or causing obtaining the vehicle information comprises:
- obtaining or causing obtaining vehicle identification information identifying the vehicle; and
- retrieving or causing retrieving the vehicle information from a database based on the vehicle identification information.

### Embodiment 9

The method of any of embodiments 1 to 8, wherein the at least one vehicle lane and/or the at least one drivable zone comprises at least one of the following:
o a carpool lane;
o a high-occupancy lane;
o an electric vehicle, EV, lane;
o a bus lane;
o a truck lane;
o a bike lane;
o a low-emission zone, LEZ; or
o a clean air zone.

### Embodiment 10

The method of any of embodiments 1 to 9, wherein the vehicle information is indicative of at least one of the following:
o a type of the vehicle;
o a weight of the vehicle;
o at least one spatial dimension of the vehicle;
o at least one emission characteristic of the vehicle; or
o a number of the one or more users of the vehicle.

### Embodiment 11

The method of any of embodiments 1 to 10, further comprising:
- obtaining or causing obtaining information indicative of an availability of the at least one vehicle lane and/or of the at least one drivable zone; and
- routing or causing routing the vehicle based on the availability of the at least one vehicle lane and/or of the at least one drivable zone.

### Embodiment 12

The method of any of embodiments 1 to 11, further comprising:
- obtaining or causing obtaining traffic information indicative of traffic associated with the at least one vehicle lane and/or with the at least one drivable zone; and
- routing or causing routing the vehicle based on the traffic information.

### Embodiment 13

The method of any of embodiments 1 to 12, further comprising:
- obtaining or causing obtaining passenger information associated with one or more potential passengers;
- determining or causing determining adjusted vehicle information based on the passenger information;
- determining or causing determining the eligibility of the vehicle and/or of the one or more users of the vehicle to drive in the at least one vehicle lane and/or in the at least one drivable zone based on the eligibility criteria information and the adjusted vehicle information; and
- routing or causing routing the vehicle based on the eligibility of the vehicle and/or of the one or more users of the vehicle to drive in the at least one vehicle lane and/or in the at least one drivable zone, and further based on the passenger information.

### Embodiment 14

The method of any of embodiments 1 to 13, further comprising:
- providing or causing providing at least one of the following to the one or more users of the vehicle, in particular by displaying or causing displaying a respective representation:
   o the eligibility criteria information;
   o the vehicle information;
   o information associated with the at least one vehicle lane and/or with the at least one drivable zone;
   o information indicative of the eligibility of the vehicle and/or of the one or more users of the vehicle to drive in the at least one vehicle lane and/or in the at least one drivable zone;
   o a travel metric associated with the route comprising at least part of the at least one vehicle lane and/or of the at least one drivable zone;
   o a travel metric associated with the route that does not comprise the at least one vehicle lane and/or the at least one drivable zone;
   o information associated with the at least one traffic sign associated with the at least one vehicle lane and/or with the at least one drivable zone;
   o information associated with the at least one traffic light associated with the at least one vehicle lane and/or with the at least one drivable zone;
   o information associated with the location associated with the at least one vehicle lane and/or with the at least one drivable zone;
   o the information indicative of the availability of the at least one vehicle lane and/or of the at least one drivable zone;
   o the traffic information; or
   o the passenger information.

### Embodiment 15

An apparatus comprising means for performing the method of any of embodiments 1 to 14.

### Embodiment 16

A system comprising means for performing the method of any of embodiments 1 to 14.

### Embodiment 17

A computer program comprising instructions, which, when executed by an apparatus, cause the apparatus to perform the method of any of embodiments 1 to 14.

### Embodiment 18

A computer-readable storage medium having stored thereon the computer program of embodiment 17.

Any presented connection in the described embodiments is to be understood in a way that the involved components are operationally coupled. Thus, the connections can be direct or indirect with any number or combination of intervening elements, and there may be merely a functional relationship between the components.

### Further, as used in this text, the term 'circuitry' refers to any of the following:

(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile device, to perform various functions) and
(c) to circuits, such as a microprocessor(s) or a section of a microprocessor(s), that require software or firmware for operation, even if the software or firmware is not physically present.

**This definition of 'circuitry' applies to all uses of this term in this text, including in any claims. As a further example, as used in this text, the term 'circuitry' also covers an implementation of merely a** processor (or multiple processors) or section of a processor and its (or their) accompanying software **and/or firmware. The term 'circuitry' also covers, for example, a baseband integrated circuit or** applications processor integrated circuit for a mobile phone.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor.

**References to 'computer-readable storage medium' should be understood to encompass specialized** circuits such as FPGAs, ASICs, signal processing devices, and other devices.

**The wording "A, or B, or C, or a combination thereof" or "at least one of A, B and C" may be understood** to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method performed by at least one apparatus, the method comprising:
- obtaining or causing obtaining eligibility criteria information indicative of at least one eligibility criterion associated with at least one vehicle lane and/or with at least one drivable zone;
- obtaining or causing obtaining vehicle information indicative of at least one characteristic of a vehicle and/or of one or more users of the vehicle;
- determining or causing determining an eligibility of the vehicle and/or of the one or more users of the vehicle to drive in the at least one vehicle lane and/or in the at least one drivable zone based on the eligibility criteria information and the vehicle information; and
- routing or causing routing the vehicle based on the eligibility of the vehicle and/or of the one or more users of the vehicle to drive in the at least one vehicle lane and/or in the at least one drivable zone.

2. The method of claim 1,
- wherein determining or causing determining the eligibility of the vehicle and/or of the one or more users of the vehicle to drive in the at least one vehicle lane and/or in the at least one drivable zone comprises determining or causing determining that the vehicle and/or the one or more users of the vehicle are eligible to drive in the at least one vehicle lane and/or in the at least one drivable zone; and
- wherein routing or causing routing the vehicle based on the eligibility of the vehicle and/or of the one or more users of the vehicle to drive in the at least one vehicle lane and/or in the at least one drivable zone comprises routing or causing routing the vehicle along a route comprising at least part of the at least one vehicle lane and/or of the at least one drivable zone.

3. The method of claim 1,
- wherein determining or causing determining the eligibility of the vehicle and/or of the one or more users of the vehicle to drive in the at least one vehicle lane and/or in the at least one drivable zone comprises determining or causing determining that the vehicle and/or the one or more users of the vehicle are not eligible to drive in the at least one vehicle lane and/or in the at least one drivable zone; and
- wherein routing or causing routing the vehicle based on the eligibility of the vehicle and/or of the one or more users of the vehicle to drive in the at least one vehicle lane and/or in the at least one drivable zone comprises routing or causing routing the vehicle along a route that does not comprise the at least one vehicle lane and/or the at least one drivable zone.

4. The method of any of claims 1 to 3, wherein obtaining or causing obtaining the eligibility criteria information comprises:
- obtaining or causing obtaining at least one of the following:
o traffic sign information associated with at least one traffic sign associated with the at least one vehicle lane and/or with the at least one drivable zone,
o traffic light information associated with at least one traffic light associated with the at least one vehicle lane and/or with the at least one drivable zone, or
o location information associated with a location associated with the at least one vehicle lane and/or with the at least one drivable zone; and
- obtaining or causing obtaining the eligibility criteria information based on the traffic sign information, based on the traffic light information and/or based on the location information.

5. The method of any of claims 1 to 4, wherein the method is performed based on obtaining or causing obtaining at least one of the following:
o traffic sign information associated with at least one traffic sign associated with the at least one vehicle lane and/or with the at least one drivable zone;
o traffic light information associated with at least one traffic light associated with the at least one vehicle lane and/or with the at least one drivable zone;
o location information associated with a location associated with the at least one vehicle lane and/or with the at least one drivable zone;
o an indication of a driving maneuver associated with the at least one vehicle lane and/or with the at least one drivable zone; or
o a user request.

6. The method of any of claims 1 to 5, wherein the at least one vehicle lane and/or the at least one drivable zone comprises at least one of the following:
o a carpool lane;
o a high-occupancy lane;
o an electric vehicle, EV, lane;
o a bus lane;
o a truck lane;
o a bike lane;
o a low-emission zone, LEZ; or
o a clean air zone.

7. The method of any of claims 1 to 6, wherein the vehicle information is indicative of at least one of the following:
o a type of the vehicle;
o a weight of the vehicle;
o at least one spatial dimension of the vehicle;
o at least one emission characteristic of the vehicle; or
o a number of the one or more users of the vehicle.

8. The method of any of claims 1 to 7, further comprising:
- obtaining or causing obtaining information indicative of an availability of the at least one vehicle lane and/or of the at least one drivable zone; and
- routing or causing routing the vehicle based on the availability of the at least one vehicle lane and/or of the at least one drivable zone.

9. The method of any of claims 1 to 8, further comprising:
- obtaining or causing obtaining traffic information indicative of traffic associated with the at least one vehicle lane and/or with the at least one drivable zone; and
- routing or causing routing the vehicle based on the traffic information.

10. The method of any of claims 1 to 9, further comprising:
- obtaining or causing obtaining passenger information associated with one or more potential passengers;
- determining or causing determining adjusted vehicle information based on the passenger information;
- determining or causing determining the eligibility of the vehicle and/or of the one or more users of the vehicle to drive in the at least one vehicle lane and/or in the at least one drivable zone based on the eligibility criteria information and the adjusted vehicle information; and
- routing or causing routing the vehicle based on the eligibility of the vehicle and/or of the one or more users of the vehicle to drive in the at least one vehicle lane and/or in the at least one drivable zone, and further based on the passenger information.

11. The method of any of claims 1 to 10, further comprising:
- providing or causing providing at least one of the following to the one or more users of the vehicle, in particular by displaying or causing displaying a respective representation:
o the eligibility criteria information;
o the vehicle information;
o information associated with the at least one vehicle lane and/or with the at least one drivable zone;
o information indicative of the eligibility of the vehicle and/or of the one or more users of the vehicle to drive in the at least one vehicle lane and/or in the at least one drivable zone;
o a travel metric associated with the route comprising at least part of the at least one vehicle lane and/or of the at least one drivable zone;
o a travel metric associated with the route that does not comprise the at least one vehicle lane and/or the at least one drivable zone;
o information associated with the at least one traffic sign associated with the at least one vehicle lane and/or with the at least one drivable zone;
o information associated with the at least one traffic light associated with the at least one vehicle lane and/or with the at least one drivable zone;
o information associated with the location associated with the at least one vehicle lane and/or with the at least one drivable zone;
o the information indicative of the availability of the at least one vehicle lane and/or of the at least one drivable zone;
o the traffic information; or
o the passenger information.

12. An apparatus comprising means for performing the method of any of claims 1 to 11.

13. A system comprising means for performing the method of any of claims 1 to 11.

14. A computer program comprising instructions, which, when executed by an apparatus, cause the apparatus to perform the method of any of claims 1 to 11.

15. A computer-readable storage medium having stored thereon the computer program of claim 14.
